# EUROPEAN PATENT APPLICATION

(11) **EP 4 770 198 A1**
(43) Date of publication of application: **01.07.2026**
(21) Application number: 23953569.3
(22) Date of filing: 27.09.2023
(51) Int. Cl.: H04W 40/22

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Mewburn Ellis LLP
(86) International application number: PCT/CN2023/122308
(87) International publication number: WO 2025/065417

(57) **Abstract**

A communication method and device are provided. The method includes the following. A terminal device sends first information, where the first information includes one or more resource request information, where the resource request information includes first target information, or the resource request information includes first target information and one or more second target information, and the terminal device is a terminal device in a sidelink.

## Description

### TECHNICAL FIELD

This disclosure relates to the field of communications, and more specifically, to a communication method and device.

### BACKGROUND

With the development of wireless communication technologies, relay has been introduced in the 3rd generation partnership project (3GPP). For example, in a user equipment-to-user equipment (UE to UE, U2U) relay link, different remote terminals, such as a source terminal and a target terminal, can be connected via a relay terminal. In a U2U relay link, a remote terminal or a relay terminal may request network devices to configure and provide sidelink transmission-related configurations and resources.

### SUMMARY

Embodiment of the disclosure provides a communication method and device, which can better provide configurations for various terminal devices on a sidelink.

An embodiment of the disclosure provides a communication method, including the following. A terminal device sends first information, where the first information includes one or more resource request information elements, and where one resource request information element includes first target information, or one resource request information element includes first target information and one or more second target information, the terminal device is a terminal device in a sidelink.

An embodiment of the disclosure provides a communication method, including the following. A network device receives first information, where the first information includes one or more resource request information elements from a terminal device, and where one resource request information element includes first target information, or one resource request information element includes first target information and one or more second target information, the terminal device is a terminal device in a sidelink.

An embodiment of the disclosure provides a terminal device, includes a sending unit. The sending unit is configured to send first information, where the first information includes one or more resource request information elements, and where one resource request information element includes first target information, or one resource request information element includes first target information and one or more second target information, the terminal device is a terminal device in a sidelink.

An embodiment of the disclosure provides a network device, includes a receiving unit. The receiving unit is configured to receive first information, where the first information includes one or more resource request information elements from a terminal device, and where one resource request information element includes first target information, or one resource request information element includes first target information and one or more second target information, the terminal device is a terminal device in a sidelink.

An embodiment of the disclosure provides a terminal device, includes a transceiver, a processor, and a memory. The memory is configured to store a computer program; the transceiver is configured to communicate with other devices; and the processor is configured to invoke and execute the computer program stored in the memory, to cause the terminal device to execute the communication method described above.

An embodiment of the disclosure provides a network device, includes a transceiver, a processor, and a memory. The memory is configured to store a computer program; the transceiver is configured to communicate with other devices; and the processor is configured to invoke and execute the computer program stored in the memory, to cause the network device to execute the communication method described above.

An embodiment of the disclosure provides a chip for implementing the communication method described above. Specifically, the chip includes: a processor configured to invoke and execute a computer program from a memory, so that a device equipped with the chip executes the communication method described above.

An embodiment of the disclosure provides a computer-readable storage medium for storing a computer program, when the computer program is executed by a device, the device is caused to execute the communication method described above.

An embodiment of the disclosure provides a computer program product, comprising computer program instructions that cause a computer to execute the communication method described above.

An embodiment of the disclosure provides a computer program which, when executed on a computer, causes the computer to execute the communication method described above.

In the embodiments of the disclosure, with aid of one or more target information in resource request information sent by a terminal device in a sidelink, it is beneficial to determine sidelink-related information more accurately, thereby providing suitable configurations for terminal devices in the sidelink.

### BRIEF DESCRIPTION OF THE DRAWINGS

Fig. 1 is a schematic diagram of an application scenario according to an embodiment of the disclosure.
Fig. 2A and Fig. 2B are schematic diagrams of 3GPP transmission modes.
Fig. 3A and Fig. 3B are schematic diagrams of protocol definitions for LTE-V2X sidelinks.
Fig. 4 is a schematic diagram of UE-to-UE relay.
Fig. 5 is a schematic flowchart of connection establishment for UE-to-UE relay.
Fig. 6 is a schematic diagram of UE architecture in UE-to-UE relay.
Fig. 7 is a schematic diagram of the SUI signaling procedure.
Fig. 8 is a schematic flowchart of a communication method according to an embodiment of the disclosure.
Fig. 9 is a schematic flowchart of a communication method according to an embodiment of the disclosure.
Fig. 10 is a schematic diagram of SUI reporting.
Fig. 11 is a schematic block diagram of a terminal device according to an embodiment of the disclosure.
Fig. 12 is a schematic block diagram of a network device according to an embodiment of the disclosure.
Fig. 13 is a schematic block diagram of a communication device according to an embodiment of the disclosure.
Fig. 14 is a schematic block diagram of a chip according to an embodiment of the disclosure.
Fig. 15 is a schematic block diagram of a communication system according to an embodiment of the disclosure.

### DETAILED DESCRIPTION

Technical solutions in embodiments of the disclosure will be described below in combination with the drawings in the embodiments of the disclosure.

The technical solutions in the embodiments of the disclosure may be applied to various communication systems, for example: long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (WiFi), 5th-Generation (5G) system, or other communication systems, etc.

Generally, traditional communication systems support a limited number of connections and are easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, etc. The embodiments of the disclosure may also be applied to these communication systems.

In an implementation, the communication system in the embodiments of the disclosure may be applied to a carrier aggregation (CA) scenario, may also be applied to a dual connectivity (DC) scenario, and may also be applied to a standalone (SA) network deployment scenario.

In an implementation, the communication system in the embodiments of the disclosure may be applied to unlicensed spectrum, where unlicensed spectrum may also be considered as shared spectrum; or, the communication system in the embodiments of the disclosure may also be applied to licensed spectrum, where licensed spectrum may also be considered as non-shared spectrum.

The embodiments of the disclosure describe various embodiments in combination with network devices and terminal devices, where the terminal device may also be called user equipment (UE), access terminal, subscriber unit, subscriber station, mobile station, mobile platform, remote station, remote terminal, mobile device, user terminal, terminal, wireless communication device, user agent, or user apparatus, etc.

The terminal device may be a station (STAION, ST) in WLAN, may be a cellular telephone, a cordless telephone, a session initiation protocol (SIP) telephone, a wireless local loop (WLL) station, a personal digital assistant (PDA) device, a handheld device having wireless communication function, a computing device or other processing device connected to a wireless modem, a vehicle-mounted device, a wearable device, a terminal device in a next-generation communication system such as an NR network, or a terminal device in a future evolved public land mobile network (PLMN) network, etc.

In the embodiments of the disclosure, the terminal device may be deployed on land, including indoor or outdoor, handheld, wearable, or vehicle-mounted; may also be deployed on water surfaces (such as ships, etc.); and may also be deployed in the air (for example, on airplanes, balloons, satellites, etc.).

In the embodiments of the disclosure, the terminal device may be a mobile phone, a tablet computer (Pad), a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

As an example rather than limitation, in the embodiments of the disclosure, the terminal device may also be a wearable device. Wearable devices can also be called wearable smart devices, which are a general term for intelligently designed and developed wearable devices for daily wear by applying wearable technology, such as glasses, gloves, watches, clothing and shoes, etc. Wearable devices are portable devices that are worn directly on the body or integrated into the user's clothing or accessories. Wearable devices are not only a hardware device, but also achieve powerful functions through software support and data interaction, cloud interaction. Broadly defined wearable smart devices include those with full functions, large size, and can achieve complete or partial functions without relying on smartphones, for example: smart watches or smart glasses, etc., as well as those that only focus on a certain type of application function and need to be used in conjunction with other devices such as smartphones, such as various smart bracelets and smart jewelry for monitoring physical signs.

In the embodiments of the disclosure, the network device may be a device for communicating with mobile devices, the network device may be an access point (AP) in WLAN, may be an evolutional Node B (eNB or eNodeB) in LTE, or a relay station or access point, or a vehicle-mounted device, a wearable device, and a network device (gNB) in NR network, or a network device in a future evolved PLMN network, or a network device in an NTN network, etc.

As an example rather than limitation, in the embodiments of the disclosure, the network device may have mobility characteristics, for example, the network device may be a mobile device. Optionally, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In the embodiments of the disclosure, the network device may provide services for a cell, the terminal device communicates with the network device using transmission resources used by the cell (for example, frequency domain resources, or spectrum resources), the cell may be a cell corresponding to a network device (for example, a base station), the cell may belong to a macro base station, or may belong to a base station corresponding to a small cell (Small cell), the small cells here may include: Metro cell, Micro cell, Pico cell, Femto cell, etc., these small cells have the characteristics of small coverage and low transmission power, and are suitable for providing high-speed data transmission services.

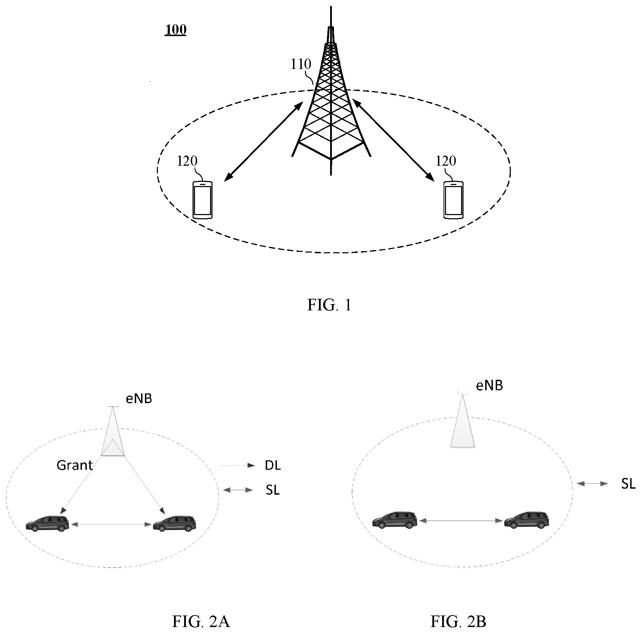

FIG. 1 exemplarily shows a communication system 100. The communication system includes one network device 110 and two terminal devices 120. In an implementation, the communication system 100 may include multiple network devices 110, and the coverage of each network device 110 may include other numbers of terminal devices 120, which is not limited in the embodiments of the disclosure.

In an implementation, the communication system 100 may also include other network entities such as mobility management entity (MME), access and mobility management function (AMF), etc., which are not limited in the embodiments of the disclosure.

Among them, the network device may include an access network device and a core network device. That is, the wireless communication system further includes multiple core networks for communicating with the access network device. The access network device may be an evolutional node B (abbreviated as eNB or e-NodeB) macro base station, a micro base station (also called "small base station"), a pico base station, an access point (AP), a transmission point (TP), or a new generation Node B (gNodeB) in a long-term evolution (LTE) system, a next radio (NR) system, or an authorized auxiliary access long-term evolution (LAA-LTE) system, etc.

It should be understood that devices with communication functions in the network/system in the embodiments of the disclosure may be called communication devices. Taking the communication system illustrated in FIG. 1 as an example, communication devices may include network devices and terminal devices with communication functions, the network devices and terminal devices may be the specific devices in the embodiments of the disclosure, which are not repeated here. Communication devices may also include other devices in the communication system, such as network controllers, mobility management entities, and other network entities, which are not limited in the embodiments of the disclosure.

It should be understood that the terms "system" and "network" in this document are often used interchangeably. The term "and/or" in this document is merely a description of an association relationship for associated objects, indicating that three relationships may exist, for example, A and/or B may indicate: A exists alone, both A and B exist, and B exists alone. In addition, the character "/" in this document generally indicates that the associated objects before and after it are in an "or" relationship.

It should be understood that "indication" mentioned in the embodiments of the disclosure may be direct indication, may be indirect indication, or may also indicate an association relationship. For example, A indicating B may be that A directly indicates B, for example, B can be obtained through A; may also be that A indirectly indicates B, for example, A indicates C, and B can be obtained through C; may also be that there is an association relationship between A and B.

In the description of the embodiments of the disclosure, the term "correspond" may indicate that there is a direct correspondence or an indirect correspondence between the two, may also indicate that there is an association relationship between the two, and may also be an indication-indicated, configuration-configured, etc. relationship.

To facilitate understanding of the technical solutions of the embodiments of the disclosure, the related technologies of the embodiments of the disclosure are described below. The following related technologies may be arbitrarily combined with the technical solutions of the embodiments of the disclosure as optional solutions, and all belong to the protection scope of the embodiments of the disclosure.

### I. LTE Device to D2D/V2X

Device-to-device communication is a sidelink (SL) transmission technology based on D2D. Unlike traditional cellular systems where communication data is received or sent through a base station, the vehicle-to-everything system adopts terminal-to-terminal direct communication, thus having higher spectrum efficiency and lower transmission delay.

3GPP includes two transmission modes: Mode 3 and Mode 4.

Mode 3: As illustrated in FIG. 2A, the transmission resources of the terminal are allocated by the base station, and the terminal transmits data on the sidelink according to the resources allocated by the base station. The base station may allocate resources for a single transmission to the terminal, or may allocate semi-persistent transmission resources to the terminal.

Mode 4: As illustrated in FIG. 2B, a vehicle-mounted terminal selects a resource from a resource pool for data transmission.

In 3GPP, D2D includes different phases.
(1) Proximity based Service (ProSe): In Rel-12/13, device-to-device communication was studied for the ProSe scenario, mainly targeting public safety services. In ProSe, by configuring the position of the resource pool in the time domain, for example, the resource pool is discontinuous in the time domain, the UE can discontinuously transmit/receive data on the sidelink, thereby achieving power saving.
(2) Vehicle-to-everything: In Rel-14/15, the vehicle-to-everything system studied the vehicle-to-vehicle communication scenario, mainly targeting services with relatively high-speed moving vehicle-to-vehicle and vehicle-to-pedestrian communications. In V2X, since the vehicle-mounted system has continuous power supply, power efficiency is not the main issue, and data transmission delay is the main issue. Therefore, the system design requires terminal devices to perform continuous transmission and reception.
(3) Wearable devices, further enhancement to device-to-device (FeD2D): In Rel-14, this topic studied the scenario where wearable devices access the network via mobile phones, mainly targeting low mobility speed and low power access scenarios. In FeD2D, during the pre-research phase, the 3GPP concluded that a base station could configure discontinuous reception (DRX) parameters for a remote terminal through a relay terminal, but since this topic did not further enter the standardization stage, specific details on how to perform DRX configuration were not concluded.

### II. NR V2X

NR V2X is based on LTE V2X, not limited to broadcast scenarios, but further extends to unicast and multicast scenarios, where V2X applications are studied.

Similar to LTE V2X, NR V2X also includes two resource authorization modes: Mode 1 and Mode 2.

Different from LTE V2X, in addition to feedback-free, UE-initiated hybrid automatic repeat-request (HARQ) retransmissions, NR V2X introduces feedback-based HARQ retransmissions, not limited to unicast communication, but also including multicast communication.

NR-V2X supports network-scheduled data transmission, i.e., Mode 1. When the UE operates in Mode 1, the resource authorization for sidelink data transmission comes from the network, i.e., the network sends the resource authorization to the transmitting UE, and the transmitting UE uses this resource for sidelink transmission. Similar to uplink transmission over the air interface (Uu interface), since the network side does not know the current data buffer status of the UE side, the UE needs to report its current data buffer status to the network to trigger the network to send resource authorization. The difference is that the buffer status report (BSR) / scheduling request (SR) in traditional cellular networks only targets uplink data, while for V2X, BSR/SR for sidelink data needs to be introduced.

Simply put, the UE sends a scheduling request (SR or random access) to the base station, and then sends a sidelink BSR. Based on the sidelink BSR, the base station can determine that the UE has data to be transmitted for sidelink communication and estimate the resources required to transmit said data. The base station can schedule transmission resources for sidelink communication using a configured RNTI for the sidelink.

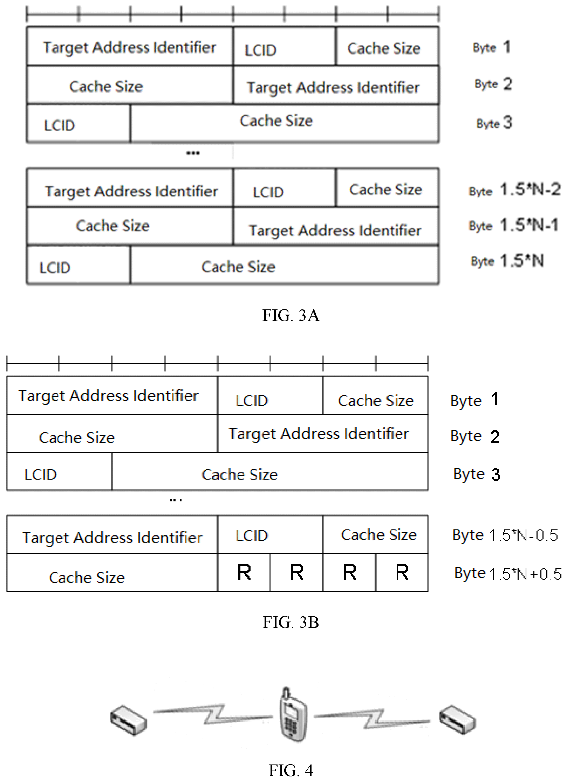

For the BSR media access control element (MAC CE) format of LTE-V2X sidelink, FIG. 3A and FIG. 3B show examples of forms defined by the protocol (defined separately for containing an even number of items and an odd number of items). Among them, FIG. 3A is the LTE-V2X sidelink BSR format (even number of items), and FIG. 3B is the LTE-V2X sidelink BSR format (odd number of items).

Examples of the meanings of different fields of the sidelink BSR are as follows:

Destination address identifier: The "Destination index" field is used to identify the destination address of the sidelink communication. The UE sets this value to the index of a relevant destination address in a destination address list reported in a sidelink UE information (SUI) message. If the UE reports multiple destination address lists in the SUI message, the UE serially arranges the multiple destination address lists in order, thereby indexing the corresponding destination addresses. Specifically, since the SUI message in LTE-V2X defines destination address lists separately for different frequencies, for a certain destination address, when it can be used on more than one frequency, a situation occurs where one destination address corresponds to multiple destination indices, thus leading to some redundancy in destination indices. This problem was not solved in LTE-V2X. In NR-V2X, the signaling structure of the SUI message was modified to address this issue, that is, the frequency list is placed in different destination address structures, thereby avoiding this problem.

Logical channel group identifier: This field identifies the logical channel group for which the UE is reporting buffer status. Here, the logical channel group identifier indicates the ProSe Per-Packet Priority (PPPP) and ProSe Per-Packet Reliability (PPPR) related to the data to be transmitted. Specifically, the UE reports, via the sidelink BSR, the amount of data associated with one or more PPPP and/or PPPR values. The mapping of PPPP and PPPR values to logical channel groups can be configured by the base station, and the PPPP values and/or PPPR values are reflected by the logical channel group ID contained in the sidelink BSR.

Buffer size: Similar to the definition of uplink BSR, this field defines the total amount of data of all logical channels of a relevant logical channel group (LCG) after generating a MAC protocol data unit (PDU), including all data available for transmission at the radio link control (RLC) layer and packet data convergence protocol (PDCP) layer (for example, not considering the size of RLC and MAC packet headers).

Furthermore, the above format is also applicable to a truncated sidelink BSR. That is, when the size of the resource authorization is insufficient to contain all sidelink BSR information, the UE may perform a truncation operation on the sidelink BSR. When performing the truncation operation, for buffer information of different destination addresses and logical channel groups, the information is arranged in descending order of the priority of the highest priority logical channel contained in the logical channel group, prioritizing the inclusion of high-priority buffer information, regardless of the value of the destination index field.

For NR-V2X, the format definition of the sidelink BSR is similar, with the differences being: the destination address identifier is extended from 4 bits to 5 bits; the logical channel group identifier is extended from 2 bits to 3 bits; the buffer size is extended from 6 bits to 8 bits.

Therefore, for one logical channel group under one destination address, 2 bytes are required, so it is not necessary to define separate sidelink BSR formats for an even number of items and an odd number of items.

For the triggering of a sidelink BSR, examples of trigger conditions similar to those for an uplink BSR may include the following.
(1) New data to be transmitted appears in an RLC entity or a PDCP entity (if there is other data to be transmitted, the priority of this new data is higher than that of any data to be transmitted in any logical channel group of the same destination address, or the same destination address currently has no other data to be transmitted).
(2) After allocating space for resource authorization for data and triggering a padding BSR for an uplink channel, the number of remaining bits is equal to or greater than the size of the sidelink BSR (containing buffer information of at least one logical channel group of at least one destination address).
(3) The sidelink BSR retransmission timer expires, and the MAC entity has data available for sidelink transmission.
(4) The sidelink BSR periodic timer expires.

A sidelink BSR may also be triggered when the UE is configured from an autonomous resource selection mode to a network-scheduled resource selection mode. The autonomous resource selection mode may include the following examples: Mode 2 and Mode 4 under LTE-V2X; Mode 2 under NR-V2X.

### III. Sidelink UE-to-UE Relay Technology

As illustrated in Fig. 4, in 3GPP Rel-17 ProSe, a UE-to-UE (U2U) relay functionality based on Layer 2 and Layer 3 relays is included. That is, a source UE connects to a target UE via a relay UE, which forwards data between the source UE and the target UE.

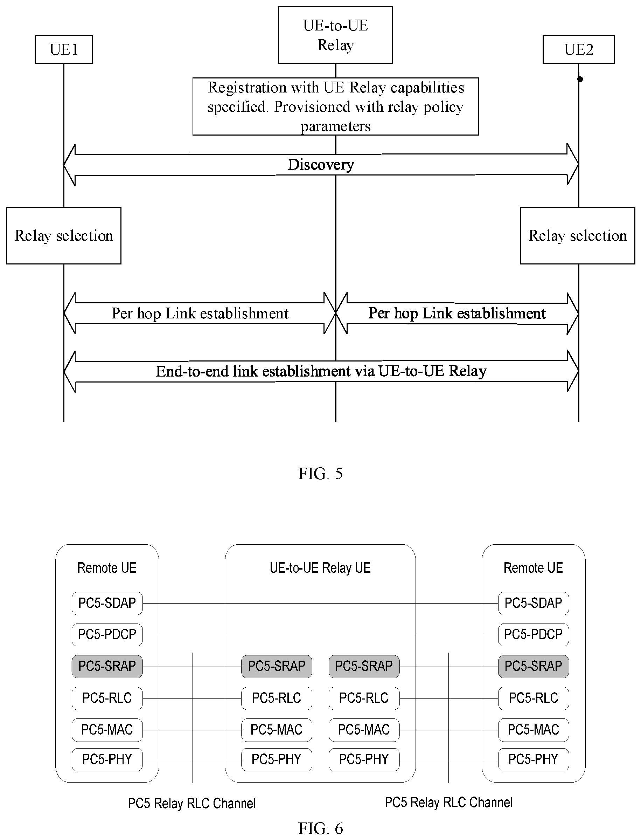

The specific connection establishment steps are illustrated in Fig. 5. The source UE, relay UE, and target UE discover one another through discovery messages or direct communication request (DCR) messages. The relay UE can assist the source UE in forwarding the discovery message or DCR message. After the source UE and target UE discover each other, they can proceed with relay selection, choose a suitable relay to establish connections with each respectively, and then use the relay to establish an end-to-end direct communication interface (PCS) connection.

3GPP Rel-17 includes Layer 2 UE-to-UE relays. As illustrated in Fig. 6, an adaptation layer (e.g., the sidelink relay adaptation protocol (SRAP) layer) is placed above the RLC sublayer in both the control plane and user plane between the relay UE and remote UEs, such as the source UE/target UE. The PCS service data adaptation protocol (SDAP)/ PDCP and radio resource control (RRC) terminate between the source terminal and the target terminal, i.e., between the two remote UEs. In contrast, the adaptation layer (SRAP), RLC, MAC, and physical layer (PHY) terminate within each direct link (i.e., the link between the source terminal and the relay terminal, and the link between the relay terminal and the target terminal).

Examples for L2 UE-to-UE relays are as follows.
(1) The adaptation layer in the relay terminal supports sidelink bearer mapping between access PC5 RLC channels. For sidelink relay traffic, different end-to-end bearers for the same remote UE and/or different remote UEs, such as signalling radio bearers (SRBs) and data radio bearers (DRBs), can be multiplexed and mapped onto a single PC5 RLC channel in an N:1 mapping.
(2) The adaptation layer is used to support terminal identifier for sidelink service (multiplexing data from multiple terminals). Terminal PCS radio bearer and terminal identifier information are included in the adaptation layer so that the target can associate the received data packets of the specific PDCP entity associated with the source terminal's radio bearer.

### IV. Uu Interface Sidelink Information Reporting

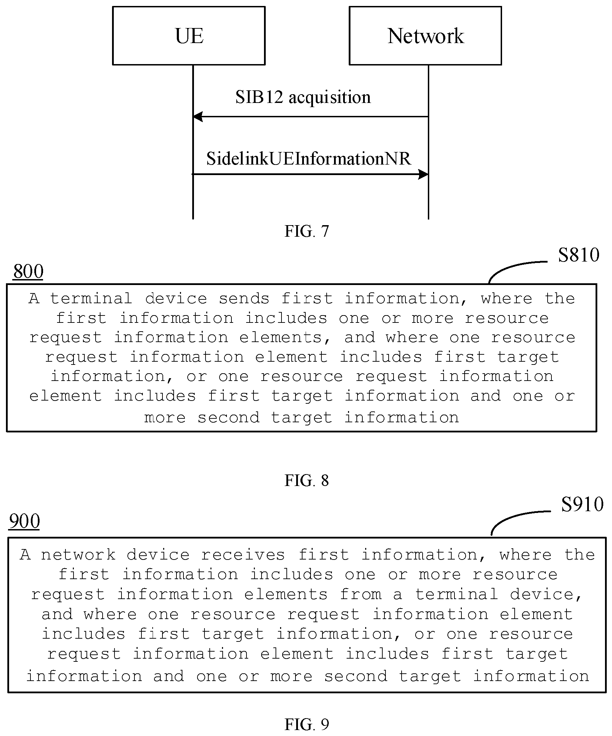

As illustrated in Fig. 7, Uu interface sidelink information reporting is performed through the SUI procedure. Whenever the system broadcasts V2X-related system information such as SIB12, and the UE supports V2X sidelink communication capability, if an RRC_CONNECTED UE wishes to perform V2X sidelink communication, it can send an SUI message (e.g., SidelinkUEInformationNR) to the serving cell. The purpose of this procedure is to inform the base station that the UE is interested or no longer interested in V2X sidelink communication.

Furthermore, the SUI message (also referred to as SUI signaling) can serve the following purposes.
(1) If an RRC_CONNECTED UE wishes to perform sidelink communication on a specific carrier frequency, it can send an SUI message to its serving cell. This SUI message carries quality of service (QoS) flow information for each destination address. Based on the UE's report, the serving cell can configure relevant resources and parameters (SDAP/PDCP/RLC/MAC configurations) on the requested carrier frequency for that UE.
(2) For network-scheduled resource allocation, the base station can schedule V2X transmissions based on sidelink BSRs. To determine the destination address index in the BSR, the UE reports relevant destination addresses to the base station via the SUI message, thereby enabling the base station and/or UE to determine the relevant index for subsequent sidelink BSR reporting.

An example of an SUI signaling format is as follows.

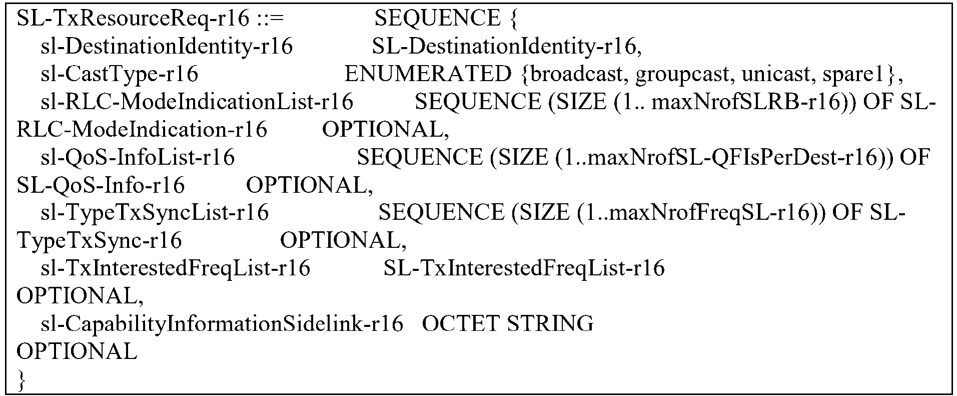

An example of the signaling format for network configuration information is as follows.

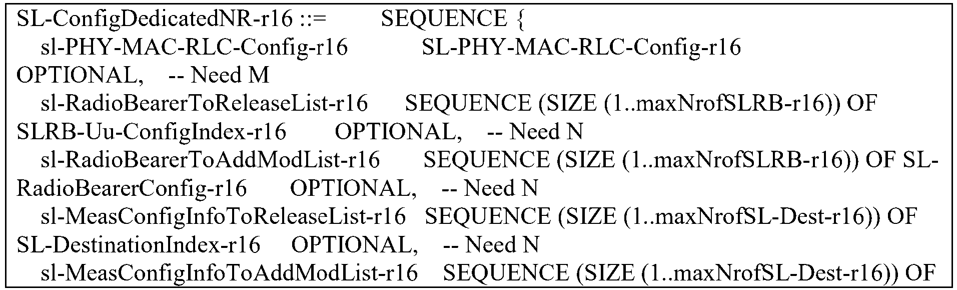

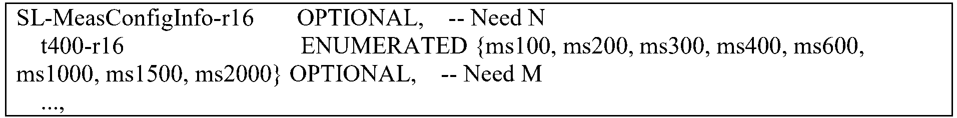

In the current SUI format, when a UE requests network parameters or resource configuration, it uses the destination address (sl-DestinationIdentity) as an index/entry point. The network can configure resource scheduling and protocol stack parameters for the UE based on the label of each destination address and its associated QoS flows. However, in the case of U2U relay, the following issues arise.

For each remote UE: For each U2U link, the remote UE has two peer endpoints. Specifically, for the SRAP/RLC/MAC/PHY layers, the peer is the relay UE, while for the SDAP/PDCP layers, the peer is the target remote UE. Additionally, the mapping relationship between the relay UE and the remote UE may not be one-to-one. For example, the same relay UE may provide relay services for multiple remote UEs, and the same pair of remote UEs may also communicate through multiple relay UEs. Therefore, how to report two or more destination IDs to inform the network of the topology of the U2U relay link, enabling the network to configure parameters and allocate resources accordingly, remains a challenge.

For the relay UE: It needs to inform the network that it is a relay UE so that the network can better provide configurations and resources for it.

Fig. 8 is a schematic flowchart of a communication method according to an embodiment of the disclosure. The method can be applied to but not limited to the system illustrated in Fig. 1 to Fig. 7. The method includes at least part of the following.

S810, a terminal device sends first information, the first information includes one or more resource request information, the resource request information includes first target information, or the resource request information includes first target information and one or more second target information, and the terminal device is a terminal device in a sidelink.

In the embodiments of the disclosure, the sidelink may be a sidelink relay link, such as a U2U relay link. The U2U relay link may be a single-hop relay link or a multi-hop relay link. The terminal device in the relay link may be a remote terminal or a relay terminal. The remote terminal and/or the relay terminal in the relay link may report their respective first information to the network device. In some examples, the first information may be SUI. One resource request information in the first information may be used to request from the network device configurations such as resources and/or parameters required by the terminal device for a certain U2U relay link.

In some examples, one resource request information may include multiple types of target information, such as first target information and one or more pieces of second target information. The multiple pieces of second target information may also be referred to as a second target information list or a second target information inventory. If the first target information indicates a remote terminal on a first U2U relay link, one piece of second target information may indicate one relay terminal on the first U2U relay link. If the first target information indicates a relay terminal on a first U2U relay link, one piece of second target information may indicate one remote terminal on the first U2U relay link. For example, if the terminal device is Remote UE1, and the first target information indicates the remote terminal Remote UE4 on the U2U relay link Relaylink1, one piece of second target information may indicate the relay terminal Relay UE2 directly connected to Remote UE1 on the U2U relay link Relaylink1, and another piece of second target information may indicate the relay terminal Relay UE3 not directly connected to Remote UE1 on the U2U relay link Relaylink1. As another example, if the terminal device is Remote UE1, and the first target information indicates the relay terminal Relay UE2 directly connected to Remote UE1 on the U2U relay link, one piece of second target information may indicate the remote terminal Remote UE4 on the U2U relay link Relaylink1 reachable via Relay UE2, and another piece of second target information may indicate the remote terminal Remote UES on the U2U relay link Relaylink2 reachable via Relay UE2.

In some examples, one resource request information may include one type of target information, such as first target information. Multiple resource request information may include multiple types of target information. For example, if the terminal device is Relay UE2, the first target information in one resource request information may indicate the remote terminal Remote UE3 on the U2U relay link Relaylink1. As another example, if the terminal device is Remote UE1, the first target information in one resource request information may indicate the remote terminal Remote UE4 on the U2U relay link Relaylink1, and the first target information in another resource request information may indicate the relay terminal Relay UE2 directly connected to Remote UE1.

In the embodiments of the disclosure, the one or more pieces of target information included in the resource request information sent by the terminal device in the sidelink facilitate more accurate determination of information related to the sidelink, thereby providing suitable configurations for the terminal device in the sidelink. For example, the one or more pieces of target information included in the resource request information sent by the terminal device in the U2U relay link facilitate more accurate determination of the topology of the U2U relay link, thereby providing suitable configurations for the terminal device.

In the embodiments of the disclosure, the resource request information in the first information may include one or more of the following: first target information, second target information, capability information, QoS flow information, role information, RLC channel information, frequency information, synchronization reference type information, etc. For example, by enabling the UE in the U2U relay link to report to the network information such as the different identities of different UEs for different links in the U2U relay link and the topology of the U2U relay link, the network can better provide resources and/or parameter configurations for the UE.

In the embodiments of the disclosure, the first information may have various formats. Examples are as follows.

In one embodiment, the terminal device is a first remote terminal, and a second remote terminal is a peer remote terminal on the terminal-to-terminal (U2U) relay link where the first remote terminal is located. In the embodiments of the disclosure, the role of the terminal device may be the first remote terminal. If the first remote terminal can communicate with one or more second remote terminals via the U2U relay link, the first remote terminal may send first information including one or more resource request information to the network device.

In one embodiment, in a first format, a first target information in the resource request information may include an identifier of the second remote terminal. For example, one resource request information in SUI may correspond to one relay link, and different resource requests correspond to different relay links. The first target information in one resource request information includes an identifier of a second remote terminal Remote UE4 on a U2U relay link Relaylink1, and the first target information in another resource request information includes an identifier of a second remote terminal Remote UE6 on a U2U relay link Relaylink2.

In one embodiment, in the first format, a second target information in the resource request information includes an identifier of a relay terminal on the U2U relay link where the first remote terminal is located. In the embodiments of the disclosure, if the first target information in the resource request information includes an identifier of the second remote terminal on a U2U relay link, the second target information in the resource request information may include an identifier of a relay terminal on the U2U relay link. If the U2U relay link is a multi-hop relay link, the resource request information may include multiple pieces of second target information, and different pieces of second target information may include identifiers of different relay terminals on the U2U relay link.

In one embodiment, in the first format, the second target information includes an identifier of a relay terminal directly connected to the first remote terminal. For example, a U2U relay link Relaylink1 includes a first remote terminal Remote UE1, relay terminals RelayUE2 and RelayUE3, and a second remote terminal Remote UE4. Remote UE1 sends SUI to a network device. If the first target information in the SUI includes an identifier of Remote UE4, the second target information may include information such as an identifier of the relay terminal RelayUE2 directly connected to Remote UE1.

In one embodiment, if the first format described above is adopted, target address information in a buffer status report (BSR) MAC CE is determined based on the identifier of the relay terminal.

In one embodiment, if the first format described above is adopted, the terminal device reports the first information in an order based on peer remote terminals associated with the same relay terminal.

For example, if peer remote UE1 and peer remote UE3 are both associated with relay terminal Relay1, and peer remote UE2 is associated with relay terminal Relay2, the resource request information including peer remote UE1 and peer remote UE3 may be reported in association, followed by the resource request information including peer remote UE2. One reporting order may be: the resource request information including peer remote UE1, the resource request information including peer remote UE3 and the resource request information including peer remote UE2.

In one embodiment, in the first format, the second target information further includes capability information of the relay terminal. In the embodiments of the disclosure, in the resource request information, the identifier of the relay terminal and the capability information of the relay terminal can be jointly reported via the second target information. For example, the first remote terminal Remote UE1 in the U2U relay link Relaylink1 sends SUI to the network device. If the first target information in the resource request information included in the SUI includes an identifier of Remote UE4, the second target information may include an identifier of the relay terminal RelayUE2 directly connected to Remote UE1 on the U2U relay link Relaylink1 and capability information of RelayUE2.

In one embodiment, in the first format, the resource request information further includes capability information of the second remote terminal. That is, capability information of the remote terminal indicated by the first target information in the resource request information.

In one embodiment, the terminal device is the first remote terminal. In the second format, the first target information in the resource request information includes an identifier of a relay terminal on the U2U relay link where the first remote terminal is located. For example, one resource request information in SUI may correspond to a direct link between the first remote terminal and a relay UE, and different resource request information may correspond to direct links between the first remote terminal and different relays. The first target information in one resource request information includes an identifier of a relay terminal Relay UE2 directly connected to the first remote terminal, and the first target information in another resource request information includes an identifier of a relay terminal Relay UE4 directly connected to the first remote terminal.

In one embodiment, in the second format, the first target information in the resource request information includes an identifier of a relay terminal directly connected to the first remote terminal. For example, a U2U relay link Relaylink3 includes a first remote terminal Remote UE1, relay terminals RelayUE2, RelayUE3, and RelayUE4, and a second remote terminal Remote UE5. Remote UE1 sends SUI to the network device, where the first target information in the resource request information in the SUI includes an identifier of the relay terminal RelayUE2 directly connected to Remote UE1.

In one embodiment, in the second format, one or more second target information in the resource request information includes an identifier of the second remote terminal. The second remote terminal is a peer remote terminal on the U2U relay link where the first remote terminal is located. The second remote terminal may also be a peer remote terminal reachable by the first information via the relay terminal indicated in the first target information, or a peer remote terminal of a U2U link associated with the relay UE. For example, a U2U relay link Relaylink3 includes a first remote terminal Remote UE1, a relay terminal RelayUE2 directly connected to Remote UE1, and a second remote terminal Remote UE5. The first remote terminal Remote UE1 sends SUI to a network device, where if the first target information in the SUI includes an identifier of RelayUE2 directly connected to Remote UE1, the second target information may include an identifier of the second remote terminal Remote UE5 on Relaylink3.

In one embodiment, in the second format, the second target information further includes capability information of the second remote terminal. In the embodiments of the disclosure, in the resource request information, the identifier of the second remote terminal and the capability information of the second remote terminal can be jointly reported via the second target information. For example, a first remote terminal Remote UE1 in a U2U relay link Relaylink3 sends SUI to the network device, where if the first target information in the SUI includes an identifier of a relay terminal, such as RelayUE2, the second target information may include an identifier of the second remote terminal Remote UES associated with RelayUE2 on Relaylink3 and capability information of Remote UE5.

In one embodiment, in the second format, the resource request information further includes capability information of the relay terminal. That is, capability information of the relay terminal indicated by the first target information in the resource request information.

In one embodiment, in the first format and/or the second format described above, the resource request information further includes QoS flow information, where the QoS flow information is QoS flow information between the first remote terminal and the second remote terminal. For example, if the peer remote terminal of Remote UE1 on a U2U relay link, such as Relaylink1, is Remote UE4 in the example above, the QoS flow information in the resource request information may be QoS flow information between Remote UE1 and Remote UE4. As another example, if the peer remote terminal of Remote UE1 on a U2U relay link, such as Relaylink3, is Remote UES in the example above, the QoS flow information in the resource request information may be QoS flow information between Remote UE1 and Remote UE5.

In one embodiment, the resource request information further includes indication information for indicating the second remote terminal associated with the QoS flow information. In the embodiments of the disclosure, if the first target information in the resource request information includes an identifier of a relay terminal, and the resource request information further includes QoS flow information, the resource request information may further indicate an identifier of the second remote terminal associated with the QoS flow information. For example, the first target information in the resource request information includes an identifier of a relay terminal, such as RelayUE2. If the QoS flow information in the resource request information is QoS flow information between the first remote terminal Remote UE1 and the second remote terminal Remote UE4, the resource request information further includes indication information for indicating that the QoS flow information is associated with Remote UE4.

In one embodiment, in the first format and/or the second format described above, radio link control (RLC) channel information in the resource request information is RLC channel information between the first remote terminal and a relay terminal. For example, a U2U relay link Relaylink1 includes a first remote terminal Remote UE1, relay terminals RelayUE2 and RelayUE3, and a second remote terminal Remote UE4. In the resource request information in the SUI sent by Remote UE1 to the network device, the first target information includes an identifier of RelayUE2 or Remote UE4. In this case, the RLC channel information in the resource request information may be RLC channel information between Remote UE1 and RelayUE2.

In one embodiment, the terminal device is a relay terminal. In a third format, the resource request information includes an identifier of a remote terminal for which the relay terminal provides relay services. For example, a relay terminal RelayUE2 on a U2U relay link Relaylink1 sends SUI to the network device. In one case, the first target information in one resource request information in the SUI includes an identifier of a first remote terminal Remote UE1 directly connected to RelayUE2 on the U2U relay link Relaylink1. In another case, the first target information in one resource request information in the SUI includes an identifier of a second remote terminal Remote UE4 directly connected to RelayUE2 on the U2U relay link Relaylink1.

In one embodiment, in the third format, the resource request information includes capability information of the remote terminal. For example, a relay terminal RelayUE2 on a U2U relay link Relaylink1 sends SUI to the network device. In one case, the first target information in one resource request information in the SUI includes an identifier of a first remote terminal Remote UE1, and the resource request information may further include capability information of Remote UE1. In another case, the first target information in one resource request information in the SUI includes an identifier of a second remote terminal Remote UE4, and the resource request information may further include capability information of Remote UE4.

In one embodiment, in the third format, the resource request information further includes QoS flow information, where the QoS flow information is QoS flow information between two remote terminals for which the relay terminal provides relay services. For example, a relay terminal RelayUE2 on a U2U relay link Relaylink1 sends SUI to the network device. In one case, the first target information in one resource request information in the SUI includes an identifier of a first remote terminal Remote UE1, and the resource request information may further include QoS flow information between Remote UE1 and Remote UE4. In another case, the first target information in one resource request information in the SUI includes an identifier of a second remote terminal Remote UE4, and the resource request information may further include QoS flow information between Remote UE1 and Remote UE4.

In one embodiment, in the third format, the RLC channel information in the resource request information is RLC channel information between the relay terminal and a remote terminal. For example, referring to the example of the U2U relay link Relaylink1 above. In one resource request information in the SUI sent by RelayUE2 on Relaylink1 to the network device, if the first target information includes Remote UE1, the RLC channel information in the resource request information may be RLC channel information between RelayUE2 and Remote UE1; if the first target information includes an identifier of Remote UE4, the RLC channel information in the resource request information may be RLC channel information between RelayUE2 and Remote UE4.

In one embodiment, the method further includes: the relay terminal reports service data adaptation protocol (SDAP) layer configuration from a remote terminal to the network device. For example, the terminal device sending the first information is the relay device. The relay device may receive SDAP layer configuration sent by a remote device for which it provides relay services and report the SDAP layer configuration to the network device. The SDAP layer configuration may be included in the first information, such as SUI.

In the first format, the second format, or the third format described above, one resource request information may be understood as an information element (IE). Therefore, a UE can report, through one IE in the SUI, information related to a remote UE and/or a relay UE associated with the UE on a certain U2U relay link, thereby providing the network device with a more accurate topology of the U2U relay link, which facilitates configuring more appropriate resources for the UE for the U2U relay link.

In one embodiment, in the first format, the second format, or the third format described above, the resource request information indicates that the role of the terminal device is a first remote terminal or a relay terminal. The resource request information in the first information may explicitly or implicitly indicate the role of the terminal device sending the first information.

In one embodiment, the resource request information further includes role information of the terminal device. For example, the resource request information may include a terminal role indication field, which uses one or more bits to indicate the terminal role. For example, in one SUI, a value of 1 for the terminal role indication field indicates that the role sending the SUI is a remote terminal, and a value of 0 indicates that the role sending the SUI is a relay terminal. As another example, in one SUI, a value of 11 for the terminal role indication field indicates that the role sending the SUI is a first remote terminal, a value of 10 indicates that the role sending the SUI is a second remote terminal, a value of 01 indicates that the role sending the SUI is a relay terminal RelayUE1, and a value of 00 indicates that the role sending the SUI is a relay terminal RelayUE2.

In one embodiment, in a case where the first target information includes an identifier of a second remote terminal and the second target information includes an identifier of a relay terminal, the resource request information indicates that the terminal device is a first remote terminal.

In one embodiment, in a case where the first target information includes an identifier of a remote terminal and the resource request information does not include second target information or an identifier of a relay terminal, the resource request information indicates that the terminal device is a relay terminal.

In one embodiment, in a case where the first target information includes an identifier of a relay terminal and the second target information in the resource request information is an identifier of a second remote terminal, the resource request information indicates that the terminal device is a first remote terminal.

In one embodiment, in a fourth format, the first information includes first resource request information, second resource request information, and third resource request information. The first resource request information includes single-hop target information, the second resource request information includes end-to-end target information, and the third resource request information includes an association relationship between the single-hop target information and the end-to-end target information. The single-hop target information may indicate target information of a terminal directly connected to the terminal device sending the first information. For example, if the terminal sending the first information is a first remote terminal, the single-hop target information indicates a relay UE in the U2U relay link where the first remote terminal is located. The end-to-end target information may include information of a peer remote terminal in the U2U relay link where the first remote terminal is located.

In the embodiments of this application, the first resource request information, the second resource request information, and the third resource request information may be different IEs in the first information, respectively. For example, the first resource request information is a first IE, the second resource request information is a second IE, and the third resource request information is a third IE. For example, multiple resource request information in the SUI may correspond to one U2U relay link. The first target information in the first resource request information includes an identifier and other related information of a second remote terminal Remote UE4 on the U2U relay link Relaylink1. The first target information in the second resource request information includes an identifier and other related information of a relay terminal Relay UE2 on the U2U relay link Relaylink1. The third resource request information includes an association relationship between Remote UE4 and Relay UE2.

In one embodiment, the single-hop target information includes at least one of the following: an identifier of a relay terminal; capability information of a relay terminal; frequency information; synchronization reference type information; RLC channel information.

In the embodiments of this application, the identifier of the relay terminal in the single-hop target information may be an identifier of a relay terminal directly connected to the terminal device sending the first information. Correspondingly, the capability information of the relay terminal may also be capability information of the relay terminal directly connected to the terminal device sending the first information.

In one implementation, the end-to-end target information includes at least one of the following: an identifier of a second remote terminal; QoS flow information, i.e., QoS flow information between the first remote terminal and the second remote terminal; indication information, used to indicate the second remote terminal associated with the QoS flow information; and capability information of the second remote terminal.

In embodiments of the disclosure, the identifier of the second remote terminal in the end-to-end target information may be an identifier of the peer remote terminal in a U2U relay link. Correspondingly, the capability information of the second remote terminal may also be capability information of the peer remote terminal in the relay link.

In one implementation, the association relationship between the single-hop target information and the end-to-end target information includes an association relationship between an identifier of a relay terminal and an identifier of the second remote terminal, and/or an association relationship between an identifier of the first resource request information and an identifier of the second resource request information. For example, the single-hop target information in the first resource request information R1 includes an identifier of RelayUE2, and the end-to-end target information in the second resource request information R2 includes an identifier of RemoteUE4. The third resource request information may include an association relationship between the identifier of RelayUE2 and the identifier of RemoteUE4. Alternatively and/or additionally, the third resource request information may include an association relationship between the identifier of R1 and the identifier of R2.

In one implementation, the RLC channel information may include RLC mode information and/or packet delay budget (PDB) information for each RLC channel. The PDB information is determined based on terminal implementation and/or split QoS information. For example, the split QoS information may include QoS information corresponding to each hop obtained by slicing the overall QoS information in a U2U relay link.

In one implementation, the QoS flow information may include currently reported QoS information and/or split QoS information.

In one implementation, the identifier of the remote terminal is at least one of the following: a layer 2 identifier, a Local ID/UE ID. For example, the Local ID/UE ID may be an ID allocated to a relay UE and may be an 8-bit UE identifier carried in an SRAP packet header.

In one implementation, the identifier of the relay terminal is a layer 2 identifier.

In one implementation, the resource request information further includes frequency information used to indicate at least one of: frequency domain resources, frequencies, and carriers that the terminal device is interested in for U2U relay link communication.

In one implementation, the resource request information further includes synchronization reference type information used to indicate a synchronization reference type used on at least one of: frequency domain resources, frequencies, and carriers for U2U relay link communication. The synchronization reference type may include global navigation satellite system (GNSS), gNB, eNB, synchronization UE, etc.

In one implementation, the first information further includes radio link failure (RLF) information. For example, the first information includes RLF information and one or more pieces of resource request information.

In one implementation, when the terminal device is a first remote terminal, the RLF information indicates RLF of a direct link and/or a non-direct link of the terminal device. For example, in SUI sent by the first remote terminal RemoteUE1 to a network device, the RLF information may indicate RLF of a direct link between the RemoteUE1 and the relay terminal RelayUE2; and/or the RLF information may indicate RLF of a non-direct link between the RemoteUE1 and the second remote terminal RemoteUE4.

In one implementation, when the terminal device is a relay terminal, the RLF information indicates RLF of a direct link. For example, in SUI sent by the relay terminal RelayUE2 to a network device, the RLF information may indicate RLF of a direct link between the relay terminal RelayUE2 and the first remote terminal RemoteUE1; or the RLF information may indicate RLF of a non-direct link between the RelayUE2 and another relay terminal RelayUE3.

In one implementation, the RLF information indicates a target address where RLF occurred and/or a cause of the RLF. For example, if the RLF information indicates RLF of a direct link between the RemoteUE1 sending the SUI and the relay terminal RelayUE2, the target address where RLF occurred may be RelayUE2. If the RLF information indicates RLF of a non-direct link between the RemoteUE1 sending the SUI and the second remote terminal RemoteUE4, the target address where RLF occurred may be RemoteUE4.

In one implementation, the first information further includes radio link control (RLC) channel information, and the RLC channel information corresponds to one or more carriers. In embodiments of the disclosure, the UE may transmit sidelink transmissions to other UEs via the one or more carriers, i.e., carrier aggregation (CA) may be supported, the signaling format for indicating RLC channel information is enhanced after supporting carrier aggregation.

An example of a signaling format for indicating RLC channels is as follows:

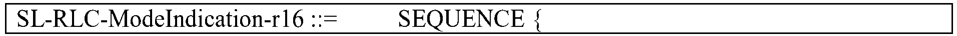

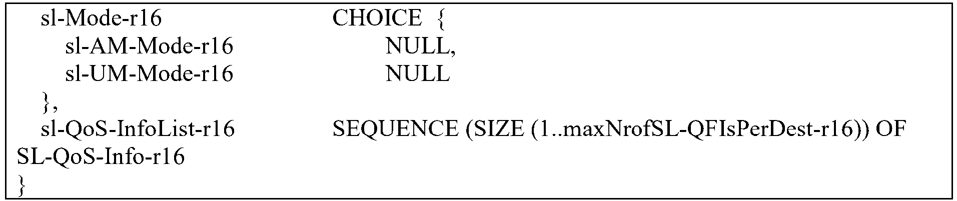

An example of the enhanced signaling format for indicating RLC channels after supporting CA is as follows:

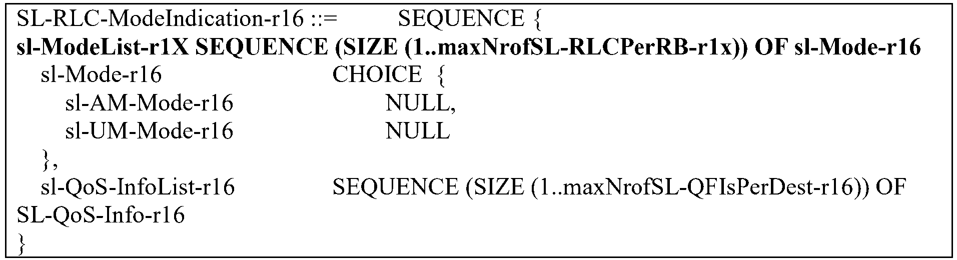

The newly added mode list parameter sl-ModeList-r1X can indicate RLC channel information corresponding to one or more carriers.

FIG. 9 is a schematic flowchart of a communication method 900 according to an embodiment of the disclosure. The method may optionally be applied to the system illustrated in FIG. 1 to FIG. 7, but is not limited thereto. The method includes at least a portion of the following content.

S910. A network device receives first information, where the first information includes one or more resource request information of a terminal device, and where one piece of resource request information includes first target information, or one piece of resource request information includes first target information and one or more pieces of second target information, and the terminal device is a terminal device in a sidelink.

In one implementation, the terminal device is a first remote terminal, the first target information includes an identifier of a second remote terminal, and the second remote terminal is a peer remote terminal on a device-to-device (U2U) relay link where the first remote terminal is located.

In one implementation, one piece of second target information includes an identifier of a relay terminal on the U2U relay link where the first remote terminal is located.

In one implementation, the second target information includes an identifier of a relay terminal directly connected to the first remote terminal.

In one implementation, target address information in a buffer status report (BSR) MAC CE is determined based on the identifier of the relay terminal.

In one implementation, the terminal device reports the first information in an order of remote terminals associated with the same relay terminal.

In one implementation, the second target information further includes capability information of the relay terminal.

In one implementation, the resource request information further includes capability information of the second remote terminal.

In one implementation, the terminal device is the first remote terminal, and the first target information includes an identifier of a relay terminal on the U2U relay link where the first remote terminal is located.

In one implementation, the first target information includes an identifier of a relay terminal directly connected to the first remote terminal.

In one implementation, one or more pieces of second target information include an identifier of the second remote terminal, and the second remote terminal is a peer remote terminal on the U2U relay link where the first remote terminal is located.

In one implementation, the second target information further includes capability information of the second remote terminal.

In one implementation, the resource request information further includes capability information of the relay terminal.

In one implementation, the resource request information further includes quality of service (QoS) flow information, the QoS flow information being QoS flow information between the first remote terminal and the second remote terminal.

In one implementation, the resource request information further includes indication information for indicating the second remote terminal associated with the QoS flow information.

In one implementation, radio link control (RLC) channel information in the resource request information is RLC channel information between the first remote terminal and the relay terminal.

In one implementation, the terminal device is a relay terminal, and the resource request information includes an identifier of a remote terminal for which the relay terminal provides relay services.

In one implementation, the resource request information includes capability information of the remote terminal.

In one implementation, the resource request information further includes QoS flow information, the QoS flow information being QoS flow information between two remote terminals for which the relay terminal provides relay services.

In one implementation, the resource request information includes RLC channel information, and the RLC channel information is RLC channel information between the relay terminal and the remote terminal.

In one implementation, the method further includes: the relay terminal reports service data adaptation protocol (SDAP) layer configuration from the remote terminal to the network device.

In one implementation, the resource request information indicates that a role of the terminal device is a first remote terminal or a relay terminal.

In one implementation, the resource request information further includes role information of the terminal device.

In one implementation, when the first target information includes an identifier of a second remote terminal and the second target information includes an identifier of the relay terminal, the resource request information indicates that the terminal device is the first remote terminal.

In one implementation, when the first target information includes an identifier of a remote terminal and the resource request information does not contain the second target information or an identifier of a relay terminal, the resource request information indicates that the terminal device is the relay terminal.

In one implementation, when the first target information includes an identifier of the relay terminal and the second target information in the resource request information is an identifier of a second remote terminal, the resource request information indicates that the terminal device is the first remote terminal.

In one implementation, the first information includes first resource request information, second resource request information, and third resource request information. The first resource request information includes single-hop target information, the second resource request information includes end-to-end target information, and the third resource request information includes an association relationship between the single-hop target information and the end-to-end target information.

In one implementation, the single-hop target information includes at least one of the following: an identifier of a relay terminal; capability information of a relay terminal; frequency information; synchronization reference type information; and RLC channel information.

In one implementation, the end-to-end target information includes at least one of the following: an identifier of a second remote terminal; QoS flow information, which is QoS flow information between the first remote terminal and the second remote terminal; indication information, used to indicate the second remote terminal associated with the QoS flow information; or capability information of the second remote terminal.

In one implementation, the association relationship includes an association relationship between an identifier of a relay terminal and an identifier of the second remote terminal, and/or an association relationship between an identifier of the first resource request information and an identifier of the second resource request information.

In one implementation, the RLC channel information includes RLC mode information and/or PDB information for each RLC channel, where the PDB information is determined based on terminal implementation and/or split QoS information.

In one implementation, the QoS flow information includes currently reported QoS information and/or split QoS information.

In one implementation, the identifier of the remote terminal is at least one of the following: a Layer 2 identifier, a local identifier.

In one implementation, the identifier of the relay terminal is a Layer 2 identifier.

In one implementation, the resource request information further includes frequency information used to indicate at least one of: frequency domain resources, frequencies, and carriers that the terminal device is interested in for device-to-device (U2U) relay link communication.

In one implementation, the resource request information further includes synchronization reference type information used to indicate a synchronization reference type used on at least one of: frequency domain resources, frequencies, and carriers for U2U relay link communication.

In one implementation, the first information further includes radio link failure (RLF) information.

In one implementation, when the terminal device is a first remote terminal, the RLF information indicates RLF of a direct link and/or a non-direct link of the terminal device.

In one implementation, when the terminal device is a relay terminal, the RLF information indicates RLF of a direct link.

In one implementation, the RLF information indicates a target address where RLF occurred and/or a cause of the RLF.

In one implementation, the first information further includes RLC channel information corresponding to one or more carriers, where the RLC channel information includes RLC channel mode information corresponding to the one or more carriers.

Specific examples of the network device executing method 900 in this embodiment may refer to the relevant descriptions regarding network devices, such as base stations, in the aforementioned method 800. For brevity, these details are not repeated here.

In the U2U relay link (abbreviated as U2U relay, U2U link, or U2U) of the embodiments of the disclosure, when the UE reports U2U relay link-related information to the network, it may indicate one or more of the following information contents to obtain network resource scheduling or radio bearer-related configurations: UE role (U2U relay UE or U2U remote UE); peer remote UE on the U2U link; relay UE on the U2U link.

In the embodiments of the disclosure, methods for carrying the above information in the reporting message may include the following:

### I. Reporting for peer remote UE (UE ID) and relay UE (UE ID)

(1) Reporting on a per-peer-remote-UE granularity (i.e., per U2U link), and further carrying information of the relay UE for that U2U relay link within each reporting entry.
(2) Reporting on a per-relay-UE granularity, and further carrying information of the peer remote UE(s) associated with that relay UE within each reporting entry.
(3) Reporting each relay UE and each peer remote UE separately, i.e., using independent IEs for reporting.

### II. Reporting for UE Role

(1) Explicit reporting method: explicitly indicating the UE role of this UE for that link in each reporting entry.
(2) Implicit reporting method: implicitly indicating the UE role of this UE through the specific content of other reported information.

Example 1: In the SUI, the same IE may be used for end-to-end information and per-hop information. The information within this IE may differ depending on the type of UE sending the SUI. Examples are as follows.

Remote UE: In the SUI, reporting is based on the granularity (index) of the target remote UE ID, and within this SUI, the relay UE corresponding to the remote UE sending the SUI is reported, along with information such as the UE role (explicit/implicit), etc.

Relay UE: In the SUI, reporting is based on the granularity (index) of the two remote UE IDs, along with information such as the UE role (explicit/implicit), etc.

For example, the first information may carry one or more of the following.
1. Target UE ID
   (1) For a remote UE, the target UE ID may be the ID (e.g., L2 ID) of the peer/target remote UE.
   (2) For a relay UE, the target UE ID may be the ID (e.g., L2 ID) of a remote UE.
2. UE Role
   (1) For a remote UE, the UE role is a remote UE, e.g., a U2U Relay remote UE. Specifically, for example, an L2 U2U Relay remote UE or an L3 U2U Relay remote UE.
   (2) For a relay UE, the UE role is a relay UE, e.g., a U2U Relay UE. Specifically, for example, an L2 U2U Relay UE or an L3 U2U Relay UE.
3. QoS Flow Information
   (1) For a remote UE, the QoS flow information may correspond to the QoS flow(s) between the remote UE and its peer/target remote UE.
   (2) For a relay UE, the QoS flow information corresponds to the QoS flow(s) between the two remote UEs for which the relay UE provides relay services. For example, the relay UE may report the two remote UE IDs associated with that QoS flow, enabling the network to identify the remote UEs corresponding to the relay UE. Furthermore, the relay UE may also report the SDAP layer configuration received from the remote UE(s) to the network.
4. RLC Channel Information
   (1) For a remote UE, the RLC channel information pertains to RLC channel information (including RLC mode information) between the remote UE and a relay UE.
   (2) For a relay UE, the RLC channel information pertains to RLC channel information (including RLC mode information) between the relay UE and a remote UE.
5. One or More Relay UE ID Information: This information is reported only when the UE is a remote UE. The reported content identifies the relay UE(s) associated with that U2U link (i.e., with that target remote UE).
6. UE Capability Information
   (1) For a remote UE, the capability information pertains to the capabilities of the peer/target remote UE of the remote UE.
   (2) For a relay UE, the capability information pertains to the capabilities of the remote UE(s) for which the relay UE provides services.
7. Relay UE Capability Information: This information may be reported only when the UE sending the SUI is a remote UE. The reported content pertains to the capabilities of the relay UE associated with that U2U link (i.e., with that target remote UE). This information and the relay UE ID information may be reported jointly.
8. Frequency Information: This indicates at least one of frequency-domain resources, frequencies, or carriers that the UE is interested in for U2U link communication.
9. Synchronization Reference Type Information: This indicates the synchronization reference type used on at least one of the frequency-domain resources, frequencies, or carriers for U2U link communication.

A schematic signaling structure of the first information is as follows.

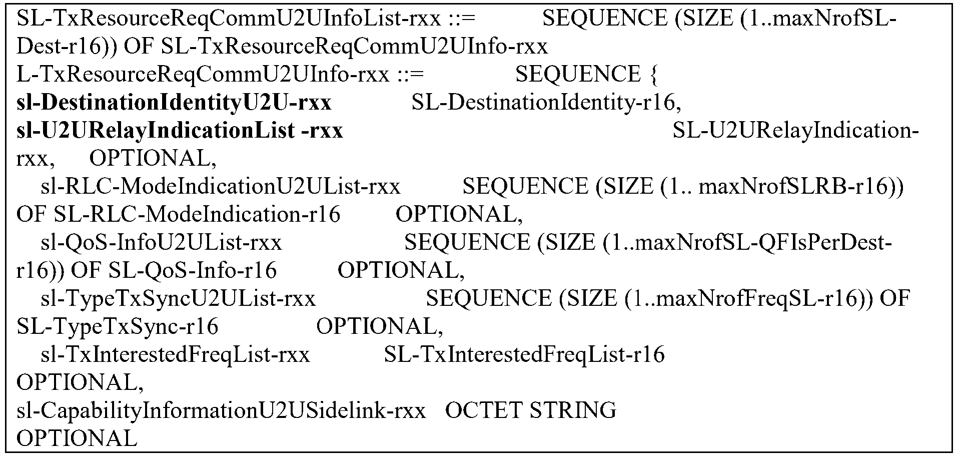

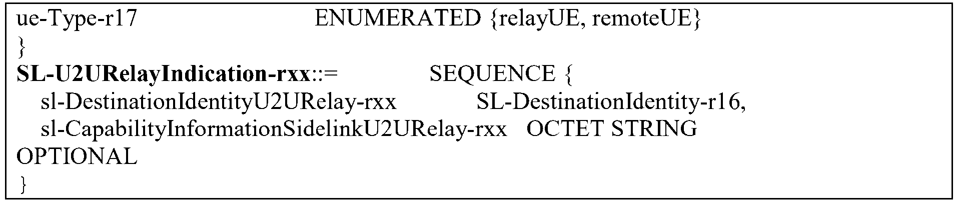

Herein, the target UE ID may be sl-DestinationIdentityU2U-rxx, which may include a remote UE ID. The UE role may be ue-Type-r17. The QoS flow information may be sl-QoS-InfoU2UList-rxx. The RLC channel information may be s1-RLC-ModeIndicationU2UList-rxx. The UE capability information may be sl-CapabilityInformationU2USidelink-rxx. One relay UE information may be SL-U2URelayIndication-rxx, where sl-DestinationIdentityU2URelay-rxx within SL-U2URelayIndication-rxx may represent a relay UE ID information, and sl-CapabilityInformationSidelinkU2URelay-rxx within SL-U2URelayIndication-rxx may represent capability information of that relay UE. Information of multiple relay UEs may be represented by sl-U2URelayIndicationList-rxx. The sl-U2URelayIndicationList-rxx may include multiple SL-U2URelayIndication-rxx. Frequency information may be s1-TxInterestedFreqList-rxx. Synchronization reference type information may be sl-TypeTxSyncU2UList-rxx.

In the above example, the role of the UE sending the SUI may be indicated implicitly. For example, if sl-U2URelayIndication-rxx is present in the SUI, it indicates that the UE sending this SUI is a remote UE (on this U2U link); otherwise, it is a relay UE.

Furthermore, sl-DestinationIdentityU2U-rxx, s1-QoS-InfoU2UList-rxx, and sl-CapabilityInformationU2USidelink-rxx may represent end-to-end related information (except for the target UE ID in the case reported by a relay UE). sl-U2URelayIndicationList-rxx, sl-RLC-ModeIndicationU2UList-rxx, sl-TypeTxSyncU2UList-rxx, sl-TxInterestedFreqList-rxx, and SL-U2URelayIndication-rxx represent per-hop related information.

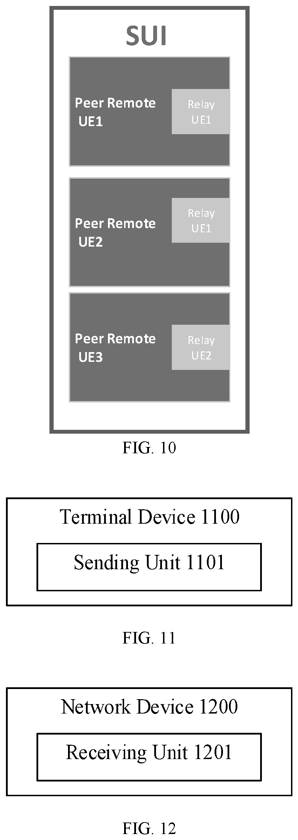

In this scenario, since the SUI of the remote UE is indexed by the peer remote UE, whereas the target address identifier (sequence number) in the BSR must be based on the relay UE, the remote UE needs to report the SUI in the order of remote UEs associated with the same relay UE. This ensures synchronization of the BSR index between the network and the remote UE, as illustrated in FIG. 10.

Example 2: In the SUI, the same IE is used for end-to-end information and per-hop information. The information contained within this IE may differ depending on the type of UE sending the SUI. An example is as follows.

Remote UE: In the SUI, reporting is based on the granularity (index) of a relay terminal ID, and within this SUI, one or more associated peer/target remote UE(s) corresponding to the remote UE sending the SUI is reported, along with information such as the UE role (explicit/implicit), etc.

Relay UE: In the SUI, reporting is based on the granularity (index) of two remote UE IDs, along with information such as the UE role (explicit/implicit), etc.

For example, the first information may carry one or more of the following.
1. Target UE ID
   (1) For a remote UE, the target UE ID is the ID (e.g., L2 ID) of a relay UE.
   (2) For a relay UE, the target UE ID is the ID (e.g., L2 ID) of a remote UE. (Refer to Example 1)
2. UE Role (Refer to Example 1)
   (1) For a remote UE, the UE role is a remote UE, e.g., a U2U Relay remote UE. Specifically, for example, an L2 U2U Relay remote UE or an L3 U2U Relay remote UE.
   (2) For a relay UE, the UE role is a relay UE, e.g., a U2U Relay UE. Specifically, for example, an L2 U2U Relay UE or an L3 U2U Relay UE.
3. QoS Flow Information
   (1) For a remote UE, the QoS flow information corresponds to the QoS flow(s) between the remote UE and its peer/target remote UE. This QoS flow information must specify which peer/target remote UE it is associated with.
   (2) For a relay UE, the QoS flow information corresponds to the QoS flow(s) between the two remote UEs for which the relay UE provides relay services. Refer to Example 1.
4. RLC Channel Information
   (1) For a remote UE, the RLC channel information pertains to RLC channel information (including RLC mode information) between the remote UE and a relay UE.
   (2) For a relay UE, the RLC channel information pertains to RLC channel information (including RLC mode information) between the relay UE and a remote UE.
5. UE Capability Information
   (1) For a remote UE, the capability information pertains to the capabilities of a relay UE.
   (2) For a relay UE, the capability information pertains to the capabilities of the remote UE(s) for which the relay UE provides relay services.
6. Peer/Target Remote UE ID Information (one or more): This information may be reported only when the UE sending the SUI is a remote UE. The reported content includes the ID information of the peer/target remote UE(s) associated with or reachable via that relay UE.
7. Peer/Target Remote UE Capability Information: This information may be reported only when the UE sending the SUI is a remote UE. The reported content includes the capability information of the peer/target remote UE(s) associated with or reachable via the relay UE corresponding to the target UE ID.
8. Frequency Information: This indicates at least one of frequency-domain resources, frequencies, or carriers that the UE is interested in for U2U link communication.
9. Synchronization Reference Type Information: This indicates the synchronization reference type used on at least one of the frequency-domain resources, frequencies, or carriers for U2U link communication.

A schematic signaling structure is as follows.

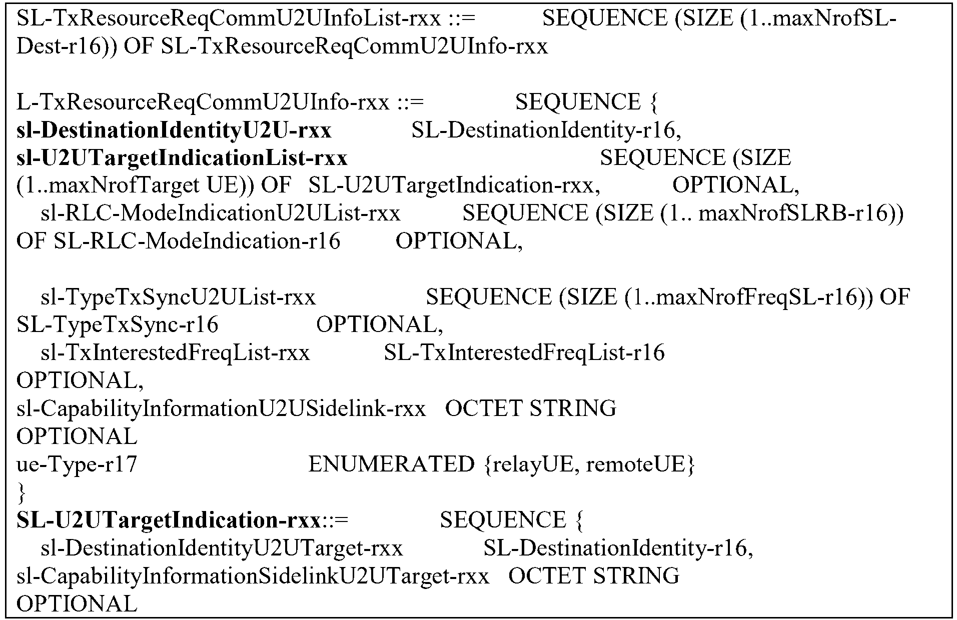

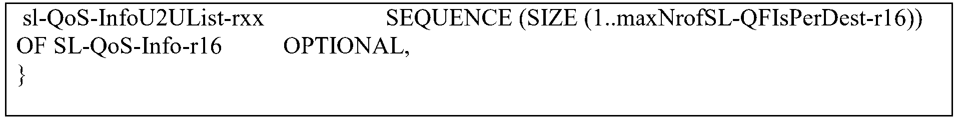

Among them, the target UE ID may be sl-DestinationIdentityU2U-rxx, and if the UE role is a remote UE, sl-DestinationIdentityU2U-rxx may include the ID of the relay UE. The UE role may be ue-Type-r17. The QoS flow information may be s1-QoS-InfoU2UList-rxx. The RLC channel information may be s1-RLC-ModeIndicationU2UList-rxx. The UE capability information may be sl-CapabilityInformationU2USidelink-rxx, which may include the capability information of the relay UE indicated by sl-DestinationIdentityU2U-rxx. The peer remote UE information may be SL-U2UTargetIndication-rxx, where sl-DestinationIdentityU2UTarget-rxx in SL-U2UTargetIndication-rxx may represent the peer remote UE ID information, and sl-CapabilityInformationSidelinkU2UTarget-rxx in SL-U2UTargetIndication-rxx may represent the capability information of that peer remote UE. Information of multiple peer remote UEs may be represented by sl-U2UTargetIndicationList-rxx. sl-U2UTargetIndicationList-rxx may include multiple sl-U2UTargetIndication-rxx. The frequency information may be sl-TxInterestedFreqList-rxx. The synchronization reference type information may be sl-TypeTxSyncU2UList-rxx.

In the above examples, the role of the UE transmitting the SUI may be indicated in an implicit manner. For example, if SL-U2UTargetIndication-rxx exists in the SUI, it indicates that the UE transmitting this SUI (on this U2U link) is a remote UE; otherwise, it is a relay UE.

Furthermore, sl-U2UTargetIndicationList-rxx, SL-U2UTargetIndication-rxx, and sl-QoS-InfoU2UList-rxx may represent end-to-end related information (except for the target UE ID in the case reported by the relay UE). sl-DestinationIdentityU2U-rxx, sl-RLC-ModeIndicationU2UList-rxx, sl-TypeTxSyncU2UList-rxx, sl-TxInterestedFreqList-rxx, and sl-CapabilityInformationU2USidelink-rxx represent per-hop related information.

Example 3: In the SUI, different IEs are used for end-to-end information and per-hop information, as well as for relay UEs and remote UEs, as shown in the following example.

Remote UE: The SUI uses the relay terminal ID as the reporting granularity (index) and reports, within the SUI one or more peer remote UEs corresponding/associated with the remote UE transmitting this SUI, and indicates the UE role (implicitly).

Relay UE: The SUI uses the two remote UE IDs as the reporting granularity (index), and indicates the UE role (implicitly).

In an example, the first information of the Remote UE may carry information through the following multiple IEs.

First IE (the remote UE carries per-hop information), for example:
1. Target UE ID, which may be the ID (L2 ID) of the relay UE.
2. RLC channel information, which may be the RLC channel information (RLC mode information) between the remote UE and the relay UE.
3. UE capability information, which may be the capability information of the relay UE.
4. Frequency information, at least one of frequency domain resources, frequencies, or carriers that the UE is interested in for U2U link communication.

Synchronization reference type information, indicates the synchronization reference type used on at least one of frequency domain resources, frequencies, or carriers used for U2U link communication.

Second IE (the remote UE carries end-to-end information), for example:
1. Target UE ID, which is the ID (L2 ID) of the peer remote UE.
2. QoS flow information, which is the QoS flow between the remote UE and the peer/target remote UE. This QoS flow information must specify which peer/target remote UE it is associated with.
3. UE capability information, which is the capability information of the peer remote UE.
4. UE capability information, which is capability information of the peer remote UE.

Third IE (the remote UE carries association relationship information between end-to-end information and per-hop information): this association relationship may be indexed via the target UE ID in the first IE and the second IE, or by additionally adding identification information for the first IE and the second IE and using this added identification information for indexing.

An example signaling structure of the first IE, second IE, and third IE in an SUI is as follows.

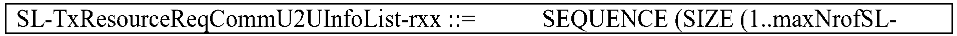

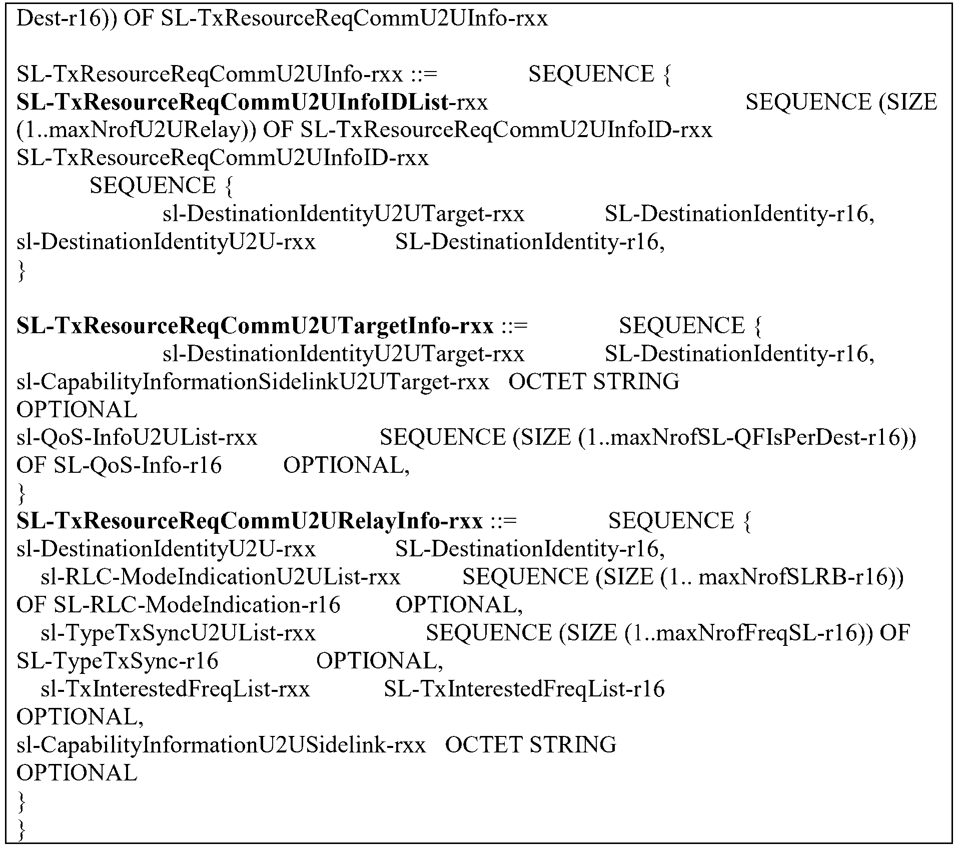

Among them, the first IE is SL-TxResourceReqCommU2URelayInfo-rxx, the second IE is SL-TxResourceReqCommU2UTargetInfo-rxx, and the third IE is SL-TxResourceReqCommU2UInfoIDList-rxx.

Another implementation method is to add identification information for the first IE and the second IE, and index them through the identification information.

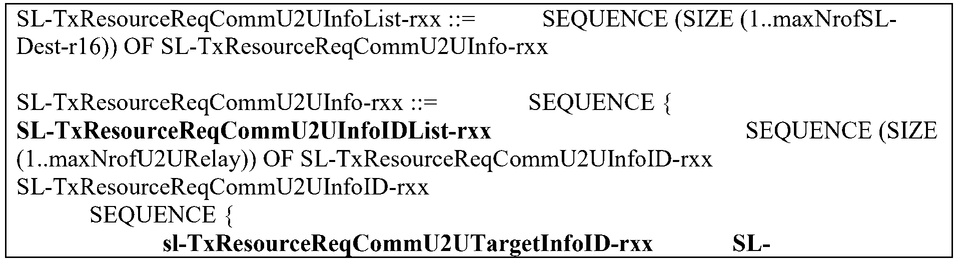

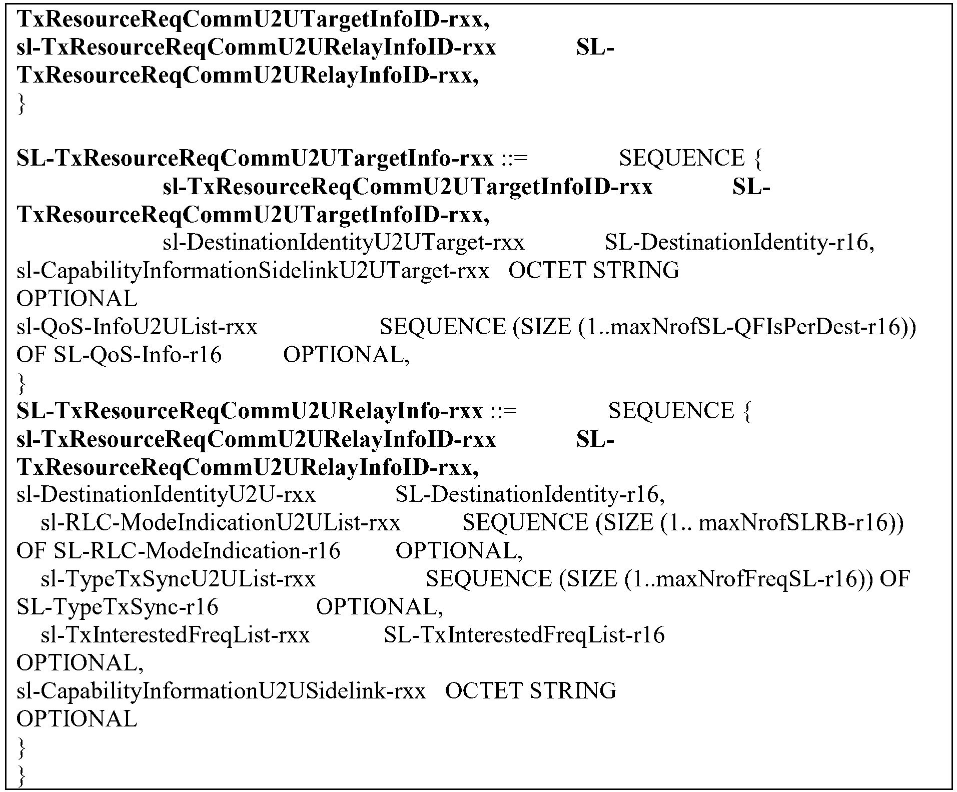

Among them, the first IE is SL-TxResourceReqCommU2URelayInfo-rxx, the second IE is SL-TxResourceReqCommU2UTargetInfo-rxx, and the third IE is SL-TxResourceReqCommU2UInfoIDList-rxx. The first IE includes the identification of the first IE, namely identification of sl-TxResourceReqCommU2UTargetInfoID-rxx, and the second IE includes the identification of the second IE, namely identification of sl-TxResourceReqCommU2UTargetInfoID-rxx.

Example 4: The first information sent by the relay UE carries one IE. For example, the SUI sent by the UE carries a fourth IE, which may include one or more of the following information.
1. Target UE ID, which is the ID (L2 ID) of the remote UE.
2. QoS flow information, which is the QoS flow between the two remote UEs for which the relay UE provides relay services. Refer to Example 1.
3. RLC channel information, which is the RLC channel information (e.g., RLC mode information) between the relay UE and the remote UE.
4. UE capability information, which is the capability information of the remote UE for which the relay UE provides relay services.
5. Frequency information, frequency domain resources/frequencies/carriers that the UE is interested in for U2U link communication.
6. Synchronization reference type information, indicate the synchronization reference type used on the frequency domain resources/frequencies/carriers for U2U link communication.

An example signaling structure of the fourth IE is as follows.

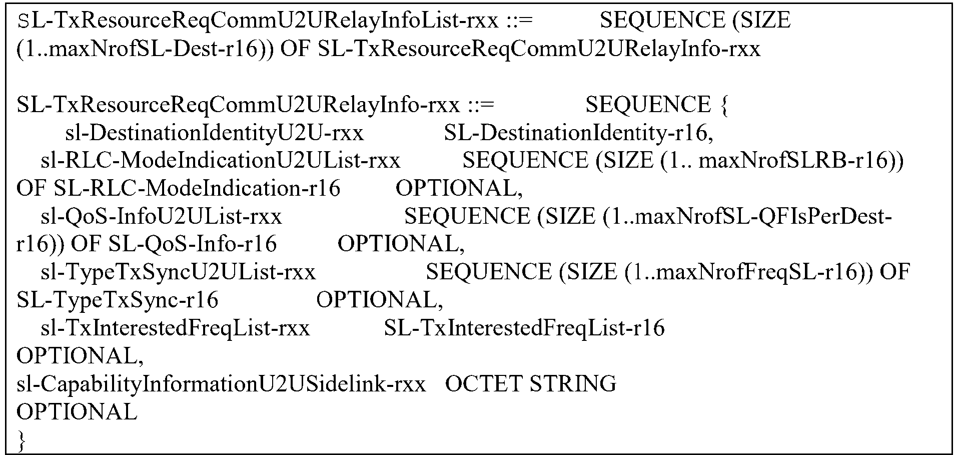

Among them, the target UE ID may be sl-DestinationIdentityU2U-rxx. The RLC channel information may be s1-RLC-ModeIndicationU2UList-rxx. The synchronization reference type information may be sl-TypeTxSyncU2UList-rxx. The frequency information may be sl-TxInterestedFreqList-rxx. The UE capability information may be sl-CapabilityInformationU2USidelink-rxx. The QoS flow information may be sl-QoS-InfoU2UList-rxx.

Example 5: When indicating PCS RLF in the SUI, indicate whether the RLF occurred per-hop or end-to-end (E2E).
(1) For a UE whose identity is a remote UE, when indicating RLF, it separately indicates RLF for direct and non-direct links.

RLF with a relay UE/direct UE: Indicate the target address (L2 ID) where RLF occurred and the cause of the RLF.

RLF with a peer remote UE: Indicate the target address (L2 ID) where RLF occurred and the cause of the RLF.

(2) For a UE whose identity is a relay UE, when indicating RLF, it only indicates RLF for direct links: Indicate the target address (L2 ID) where RLF occurred and the cause of the RLF.

The above examples in this disclosure can resolve issues such as the network's inability to learn about the different identities of different UEs for different links in U2U relay links and the topology of U2U relay links, thereby enabling the network to better provide resources and parameter configurations for UEs.

Furthermore, for the case of multiple relay UEs in Example 1 (which may introduce multi-path U2U relay in the future), when determining the BSR index, example rules are as follows.
(1) According to the order in which the relay UE ID first appears.
(2) Add an indication field in the SUI to indicate the order of the relay UEs.

The above examples can also adopt different methods in different modes, such as using Example 1 in Mode 2 and Example 2 in Mode 1.

FIG. 11 is a schematic block diagram of a terminal device 1100 according to an embodiment of the disclosure. The terminal device 1100 may include: a sending unit 1101, configured to send first information, where the first information includes one or more pieces of resource request information, one piece of resource request information includes first target information, or one piece of resource request information includes first target information and one or more pieces of second target information, and the terminal device is a terminal device in a sidelink.

In one implementation, the terminal device is a first remote terminal, and the first target information includes an identifier of a second remote terminal, which is a peer remote terminal on a UE-to-UE (U2U) relay link where the first remote terminal is located.

In one implementation, one piece of second target information includes an identifier of a relay terminal on the U2U relay link where the first remote terminal is located.

In one implementation, the second target information includes an identifier of a relay terminal directly connected to the first remote terminal.

In one implementation, target address information in a buffer status report (BSR) MAC CE is determined based on the identifier of the relay terminal.

In one implementation, the first information is reported by the terminal device in an order of remote terminals associated with the same relay terminal.

In one implementation, the second target information further includes capability information of the relay terminal.

In one implementation, the resource request information further includes capability information of the second remote terminal.

In one implementation, the terminal device is a first remote terminal, and the first target information includes an identifier of a relay terminal on the U2U relay link where the first remote terminal is located.

In one implementation, the first target information includes an identifier of a relay terminal directly connected to the first remote terminal.

In one implementation, one or more pieces of second target information include an identifier of a second remote terminal, which is a peer remote terminal on the U2U relay link where the first remote terminal is located.

In one implementation, the second target information further includes capability information of the second remote terminal.

In one implementation, the resource request information further includes capability information of the relay terminal.

In one implementation, the resource request information further includes quality of service (QoS) flow information, which is QoS flow information between the first remote terminal and the second remote terminal.

In one implementation, the resource request information further includes indication information for indicating the second remote terminal associated with the QoS flow information.

In one implementation, radio link control (RLC) channel information in the resource request information is RLC channel information between the first remote terminal and the relay terminal.

In one implementation, the terminal device is a relay terminal, and the resource request information includes an identifier of a remote terminal for which the relay terminal provides relay services.

In one implementation, the resource request information includes capability information of the remote terminal.

In one implementation, the resource request information further includes QoS flow information, which is QoS flow information between two remote terminals for which the relay terminal provides relay services.

In one implementation, the resource request information includes RLC channel information, which is RLC channel information between the relay terminal and the remote terminal.

In one implementation, the method further includes: the relay terminal reporting service data adaptation protocol (SDAP) layer configuration from the remote terminal to a network device.

In one implementation, the resource request information indicates that a role of the terminal device is a first remote terminal or a relay terminal.

In one implementation, the resource request information further includes role information of the terminal device.

In one implementation, when the first target information includes an identifier of a second remote terminal and the second target information includes an identifier of a relay terminal, the resource request information indicates that the terminal device is the first remote terminal.

In one implementation, when the first target information includes an identifier of a remote terminal and the resource request information does not include second target information or an identifier of the relay terminal, the resource request information indicates that the terminal device is the relay terminal.

In one implementation, when the first target information includes an identifier of the relay terminal and the second target information in the resource request information is an identifier of a second remote terminal, the resource request information indicates that the terminal device is the first remote terminal.

In one implementation, the first information includes first resource request information, second resource request information, and third resource request information, the first resource request information includes single-hop target information, the second resource request information includes end-to-end target information, and the third resource request information includes an association relationship between the single-hop target information and the end-to-end target information.

In one implementation, the single-hop target information includes at least one of: an identifier of a relay terminal; capability information of a relay terminal; frequency information; synchronization reference type information; RLC channel information.

In one implementation, the end-to-end target information includes at least one of: an identifier of a second remote terminal; QoS flow information, which is QoS flow information between a first remote terminal and a second remote terminal; indication information for indicating the second remote terminal associated with the QoS flow information; or capability information of the second remote terminal.

In one implementation, the association relationship includes an association relationship between an identifier of a relay terminal and an identifier of a second remote terminal, and/or an association relationship between an identifier of the first resource request information and an identifier of the second resource request information.

In one implementation, the RLC channel information includes RLC mode information and/or PDB information of each RLC channel, and the PDB information is determined based on terminal implementation and/or split QoS information.

In one implementation, the QoS flow information includes currently reported QoS information and/or split QoS information.

In one implementation, the identifier of the remote terminal is at least one of: a Layer 2 identifier, a local identifier.

In one implementation, the identifier of the relay terminal is a Layer 2 identifier.

In one implementation, the resource request information further includes frequency information, used to indicate at least one of frequency domain resources, frequencies, and carriers that the terminal device is interested in for U2U relay link communication.

In one implementation, the resource request information further includes synchronization reference type information, used to indicate a synchronization reference type used on at least one of frequency domain resources, frequencies, and carriers for U2U relay link communication.

In one implementation, the first information further includes radio link failure (RLF) information.

In one implementation, when the terminal device is a first remote terminal, the RLF information indicates RLF of a direct link and/or a non-direct link of the terminal device.

In one implementation, when the terminal device is a relay terminal, the RLF information indicates RLF of a direct link.

In one implementation, the RLF information indicates a target address where RLF occurred and/or a cause of RLF.

In one implementation, the first information further includes RLC channel information of one or more carriers.

The terminal device 1100 according to the embodiments of the disclosure can implement the corresponding functions of the terminal device in the foregoing method embodiments. The processes, functions, implementations, and beneficial effects corresponding to the respective modules (sub-modules, units, or components, etc.) in the terminal device 1100 can be referred to the corresponding descriptions in the foregoing method embodiments, and are not repeated here. It should be noted that the functions described for the respective modules (sub-modules, units, or components, etc.) in the terminal device 1100 according to the embodiments of the disclosure may be implemented by different modules (sub-modules, units, or components, etc.) or by the same module (sub-modules, unit, or component, etc.).

FIG. 12 is a schematic block diagram of a network device 1200 according to an embodiment of the disclosure. The network device 1200 may include: a receiving unit 1201, configured to receive first information, where the first information includes one or more pieces of resource request information of a terminal device, one piece of resource request information includes first target information, or one piece of resource request information includes first target information and one or more pieces of second target information, and the terminal device is a terminal device in a sidelink.

In one implementation, the terminal device is a first remote terminal, and the first target information includes an identifier of a second remote terminal, which is a peer remote terminal on a UE-to-UE (U2U) relay link where the first remote terminal is located.

In one implementation, one piece of second target information includes an identifier of a relay terminal on the U2U relay link where the first remote terminal is located.

In one implementation, the second target information includes an identifier of a relay terminal directly connected to the first remote terminal.

In one implementation, target address information in a buffer status report (BSR) MAC CE is determined based on the identifier of the relay terminal.

In one implementation, the first information is reported by the terminal device in an order of remote terminals associated with the same relay terminal.

In one implementation, the second target information further includes capability information of the relay terminal.

In one implementation, the resource request information further includes capability information of the second remote terminal.

In one implementation, the terminal device is a first remote terminal, and the first target information includes an identifier of a relay terminal on the U2U relay link where the first remote terminal is located.

In one implementation, the first target information includes an identifier of a relay terminal directly connected to the first remote terminal.

In one implementation, one or more pieces of second target information include an identifier of a second remote terminal, which is a peer remote terminal on the U2U relay link where the first remote terminal is located.

In one implementation, the second target information further includes capability information of the second remote terminal.

In one implementation, the resource request information further includes capability information of the relay terminal.

In one implementation, the resource request information further includes quality of service (QoS) flow information, which is QoS flow information between the first remote terminal and the second remote terminal.

In one implementation, the resource request information further includes indication information for indicating the second remote terminal associated with the QoS flow information.

In one implementation, radio link control (RLC) channel information in the resource request information is RLC channel information between the first remote terminal and the relay terminal.

In one implementation, the terminal device is a relay terminal, and the resource request information includes an identifier of a remote terminal for which the relay terminal provides relay services.

In one implementation, the resource request information includes capability information of the remote terminal.

In one implementation, the resource request information further includes QoS flow information, which is QoS flow information between two remote terminals for which the relay terminal provides relay services.

In one implementation, the resource request information includes RLC channel information, which is RLC channel information between the relay terminal and the remote terminal.

In one implementation, the method further includes: the relay terminal reporting service data adaptation protocol (SDAP) layer configuration from the remote terminal to the network device.

In one implementation, the resource request information indicates that a role of the terminal device is a first remote terminal or a relay terminal.

In one implementation, the resource request information further includes role information of the terminal device.

In one implementation, when the first target information includes an identifier of a second remote terminal and the second target information includes an identifier of a relay terminal, the resource request information indicates that the terminal device is the first remote terminal.

In one implementation, when the first target information includes an identifier of a remote terminal and the resource request information does not include second target information or an identifier of the relay terminal, the resource request information indicates that the terminal device is the relay terminal.

In one implementation, when the first target information includes an identifier of the relay terminal and the second target information in the resource request information is an identifier of a second remote terminal, the resource request information indicates that the terminal device is the first remote terminal.

In one implementation, the first information includes first resource request information, second resource request information, and third resource request information, the first resource request information includes single-hop target information, the second resource request information includes end-to-end target information, and the third resource request information includes an association relationship between the single-hop target information and the end-to-end target information.

In one implementation, the single-hop target information includes at least one of: an identifier of a relay terminal; capability information of a relay terminal; frequency information; synchronization reference type information; RLC channel information.

In one implementation, the end-to-end target information includes at least one of: an identifier of a second remote terminal; QoS flow information, which is QoS flow information between a first remote terminal and a second remote terminal; indication information for indicating the second remote terminal associated with the QoS flow information; or capability information of the second remote terminal.

In one implementation, the association relationship includes an association relationship between an identifier of a relay terminal and an identifier of a second remote terminal, and/or an association relationship between an identifier of the first resource request information and an identifier of the second resource request information.

In one implementation, the RLC channel information includes RLC mode information and/or PDB information of each RLC channel, and the PDB information is determined based on terminal implementation and/or split QoS information.

In one implementation, the QoS flow information includes currently reported QoS information and/or split QoS information.

In one implementation, the identifier of the remote terminal is at least one of: a Layer 2 identifier, a local identifier.

In one implementation, the identifier of the relay terminal is a Layer 2 identifier.

In one implementation, the resource request information further includes frequency information, used to indicate at least one of frequency domain resources, frequencies, and carriers in which the terminal device is interested for U2U relay link communication.

In one implementation, the resource request information further includes synchronization reference type information, used to indicate a synchronization reference type used on at least one of frequency domain resources, frequencies, and carriers for U2U relay link communication.

In one implementation, the first information further includes radio link failure (RLF) information.

In one implementation, when the terminal device is a first remote terminal, the RLF information indicates RLF of a direct link and/or a non-direct link of the terminal device.

In one implementation, when the terminal device is a relay terminal, the RLF information indicates RLF of a direct link.

In one implementation, the RLF information indicates a target address where RLF occurred and/or a cause of RLF.

In one implementation, the first information further includes RLC channel information of one or more carriers.

The network device 1200 according to the embodiments of the disclosure can implement the corresponding functions of the network device in the foregoing method embodiments. The processes, functions, implementations, and beneficial effects corresponding to the respective modules (sub-modules, units, or components, etc.) in the network device 1200 can be referred to the corresponding descriptions in the foregoing method embodiments, and are not repeated here. It should be noted that the functions described for the respective modules (sub-modules, units, or components, etc.) in the network device 1200 according to the embodiments of the disclosure may be implemented by different modules (sub-modules, units, or components, etc.) or by the same module (sub-modules, unit, or component, etc.).

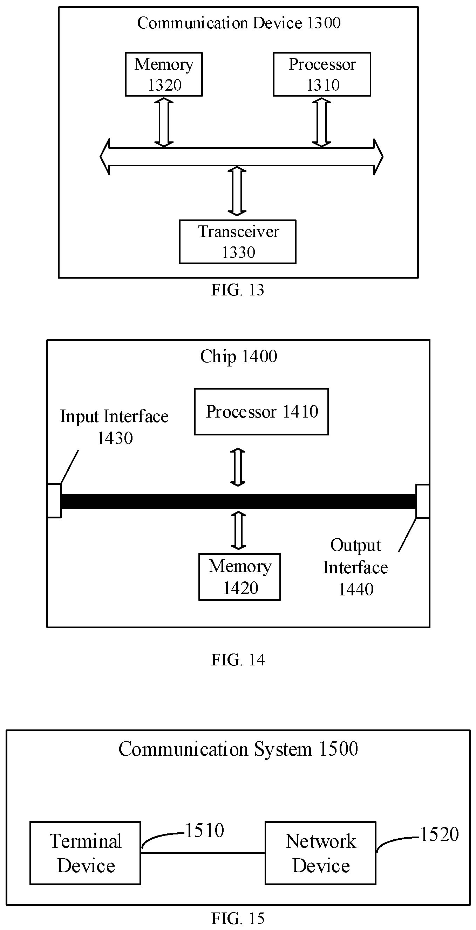

FIG. 13 is a schematic structural diagram of a communication device 1300 according to an embodiment of the disclosure. The communication device 1300 includes a processor 1310. The processor 1310 may invoke and execute a computer program from a memory to enable the communication device 1300 to implement the method in the embodiments of the disclosure.

In one implementation, the communication device 1300 may further include a memory 1320. The processor 1310 may invoke and execute a computer program from the memory 1320 to enable the communication device 1300 to implement the method in the embodiments of the disclosure.

The memory 1320 may be a separate device independent of the processor 1310 or integrated into the processor 1310.

In one implementation, the communication device 1300 may further include a transceiver 1330. The processor 1310 may control the transceiver 1330 to communicate with other devices, specifically, to send information or data to other devices or receive information or data sent by other devices.

The transceiver 1330 may include a transmitter and a receiver. The transceiver 1330 may further include one or more antennas.

In one implementation, the communication device 1300 may be a network device according to an embodiment of the disclosure, and the communication device 1300 may implement the corresponding processes performed by the network device in the various methods of the embodiments of the disclosure. For brevity, details are not repeated here.

In one implementation, the communication device 1300 may be a terminal device according to an embodiment of the disclosure, and the communication device 1300 may implement the corresponding processes performed by the terminal device in the various methods of the embodiments of the disclosure. For brevity, details are not repeated here.

FIG. 14 is a schematic structural diagram of a chip 1400 according to an embodiment of the disclosure. The chip 1400 includes a processor 1410. The processor 1410 may invoke and execute a computer program from a memory to implement the method in the embodiments of the disclosure.

In one implementation, the chip 1400 may further include a memory 1420. The processor 1410 may invoke and execute a computer program from the memory 1420 to implement the method performed by the terminal device or the network device in the embodiments of the disclosure.

The memory 1420 may be a separate device independent of the processor 1410 or integrated into the processor 1410.

In one implementation, the chip 1400 may further include an input interface 1430. The processor 1410 may control the input interface 1430 to communicate with other devices or chips, specifically, to obtain information or data sent by other devices or chips.

In one implementation, the chip 1400 may further include an output interface 1440. The processor 1410 may control the output interface 1440 to communicate with other devices or chips, specifically, to output information or data to other devices or chips.

In one implementation, the chip may be applied to a network device in the embodiments of the disclosure, and the chip may implement the corresponding processes performed by the network device in the various methods of the embodiments of the disclosure. For brevity, details are not repeated here.

In one implementation, the chip may be applied to a terminal device in the embodiments of the disclosure, and the chip may implement the corresponding processes performed by the terminal device in the various methods of the embodiments of the disclosure. For brevity, details are not repeated here.

The chips applied to the network device and the terminal device may be the same chip or different chips.

It should be understood that the chip mentioned in the embodiments of the disclosure may also be referred to as a system-on-chip, a system chip, a chip system, or a system-on-a-chip, etc.

The processor mentioned above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor may be a microprocessor or any conventional processor, etc.

The memory mentioned above may be a volatile memory or a non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or flash memory. The volatile memory may be a random access memory (RAM).

It should be understood that the above description of the memory is exemplary but not limiting. For example, the memory in the embodiments of the disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), and a Direct Rambus RAM (DR RAM), etc. That is, the memory in the embodiments of the disclosure is intended to include, but is not limited to, these and any other suitable types of memory.

FIG. 15 is a schematic block diagram of a communication system 1500 according to an embodiment of the disclosure. The communication system 1500 includes a terminal device 1510 and a network device 1520.

The terminal device 1510 is configured to send first information, the first information includes one or more pieces of resource request information, one piece of resource request information includes first target information, or one piece of resource request information includes first target information and one or more pieces of second target information, and the terminal device is a terminal device in a sidelink.

The network device 1520 is configured to receive first information, the first information includes one or more pieces of resource request information of a terminal device.

The terminal device 1510 may be configured to implement the corresponding functions performed by the terminal device in the above method, and the network device 1520 may be used to implement the corresponding functions performed by the network device in the above method. For brevity, details are not repeated here.

In the above embodiments, the implementation may be achieved entirely or partially by software, hardware, firmware, or any combination thereof. When implemented by software, it may be implemented entirely or partially in the form of a computer program product. The computer program product includes one or more computer instructions. When the computer program instructions are loaded and executed on a computer, the processes or functions according to the embodiments of the disclosure are generated entirely or partially. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or data center that integrates one or more available media. The available medium may be a magnetic medium (e.g., floppy disk, hard disk, magnetic tape), an optical medium (e.g., DVD), or a semiconductor medium (e.g., Solid State Disk (SSD)), etc.

It should be understood that in the various embodiments of the disclosure, the values of the sequence numbers of the above processes do not imply the order of execution. The execution order of each process should be determined by its function and internal logic and should not constitute any limitation on the implementation process of the embodiments of the disclosure.

Those skilled in the art may clearly understand that, for the convenience and brevity of description, the specific working processes of the systems, devices, and units described above may refer to the corresponding processes in the foregoing method embodiments, and are not repeated here.

The above descriptions are merely specific implementations of the disclosure, but the protection scope of the disclosure is not limited thereto. Any person skilled in the art can easily think of changes or substitutions within the technical scope disclosed in the disclosure, which should be covered within the protection scope of the disclosure. Therefore, the protection scope of the disclosure shall be subject to the protection scope of the claims.

## Claims

1. A communication method, comprising:
sending first information by a terminal device, wherein the first information comprises one or more resource request information, wherein the resource request information comprises first target information, or the resource request information comprises first target information and one or more second target information, and the terminal device is a terminal device in a sidelink.

2. The method according to claim 1, wherein the terminal device is a first remote terminal, the first target information comprises an identifier of a second remote terminal, and the second remote terminal is a peer remote terminal on a UE-to-UE(U2U) relay link where the first remote terminal is located.

3. The method according to claim 2, wherein the second target information comprises an identifier of a relay terminal on the U2U relay link where the first remote terminal is located.

4. The method according to claim 3, wherein the second target information comprises an identifier of a relay terminal directly connected to the first remote terminal.

5. The method according to claim 3 or 4, wherein target address information in a buffer status report (BSR) media access control (MAC) control element (CE) is determined based on the identifier of the relay terminal.

6. The method according to claim 5, wherein the first information is reported by the terminal device in an order of remote terminals associated with a same relay terminal.

7. The method according to any one of claims 3 to 6, wherein the second target information further comprises capability information of the relay terminal.

8. The method according to any one of claims 2 to 7, wherein the resource request information further comprises capability information of the second remote terminal.

9. The method according to claim 2, wherein the terminal device is the first remote terminal, and the first target information comprises an identifier of a relay terminal on the U2U relay link where the first remote terminal is located.

10. The method according to claim 9, wherein the first target information comprises an identifier of a relay terminal directly connected to the first remote terminal.

11. The method according to claim 9 or 10, wherein the one or more second target information comprise an identifier of the second remote terminal, and the second remote terminal is the peer remote terminal on the U2U relay link where the first remote terminal is located.

12. The method according to claim 11, wherein the second target information further comprises capability information of the second remote terminal.

13. The method according to any one of claims 9 to 12, wherein the resource request information further comprises capability information of the relay terminal.

14. The method according to any one of claims 2 to 12, wherein the resource request information further comprises quality of service (QoS) flow information, and the QoS flow information is QoS flow information between the first remote terminal and the second remote terminal.

15. The method according to claim 14, wherein the resource request information further comprises indication information for indicating the second remote terminal associated with the QoS flow information.

16. The method according to any one of claims 2 to 15, wherein radio link control (RLC) channel information in the resource request information is RLC channel information between the first remote terminal and a relay terminal.

17. The method according to claim 1, wherein the terminal device is a relay terminal, and the resource request information comprises an identifier of a remote terminal for which the relay terminal provides relay services.

18. The method according to claim 17, wherein the resource request information comprises capability information of the remote terminal.

19. The method according to claim 17 or 18, wherein the resource request information further comprises QoS flow information, and the QoS flow information is QoS flow information between two remote terminals for which the relay terminal provides relay services.

20. The method according to any one of claims 17 to 19, wherein the resource request information comprises RLC channel information, and the RLC channel information is RLC channel information between the relay terminal and the remote terminal.

21. The method according to any one of claims 17 to 20, wherein the method further comprises:
reporting, by the relay terminal, service data adaptation protocol (SDAP) layer configuration from the remote terminal to a network device.

22. The method according to claim 1, wherein the resource request information indicates that a role of the terminal device is a first remote terminal or a relay terminal.

23. The method according to claim 22, wherein the resource request information further comprises role information of the terminal device.

24. The method according to claim 22, wherein when the first target information comprises an identifier of a second remote terminal and the second target information comprises an identifier of the relay terminal, the resource request information indicates that the terminal device is the first remote terminal.

25. The method according to claim 22, wherein when the first target information comprises an identifier of a remote terminal and the resource request information does not comprise the second target information or an identifier of the relay terminal, the resource request information indicates that the terminal device is the relay terminal.

26. The method according to claim 22, wherein when the first target information comprises an identifier of the relay terminal and the second target information in the resource request information is an identifier of a second remote terminal, the resource request information indicates that the terminal device is the first remote terminal.

27. The method according to claim 1, wherein the first information comprises first resource request information, second resource request information, and third resource request information, the first resource request information comprises single-hop target information, the second resource request information comprises end-to-end target information, and the third resource request information comprises an association relationship between the single-hop target information and the end-to-end target information.

28. The method according to claim 27, wherein the single-hop target information comprises at least one of the following: an identifier of a relay terminal; capability information of a relay terminal; frequency information; synchronization reference type information; RLC channel information.

29. The method according to claim 27 or 28, wherein the end-to-end target information comprises at least one of the following:
an identifier of a second remote terminal;
QoS flow information, which is QoS flow information between a first remote terminal and the second remote terminal;
indication information used to indicate the second remote terminal associated with the QoS flow information; or
capability information of the second remote terminal.

30. The method according to any one of claims 27 to 29, wherein the association relationship comprises an association relationship between an identifier of a relay terminal and an identifier of a second remote terminal, and/or an association relationship between an identifier of the first resource request information and an identifier of the second resource request information.

31. The method according to claim 16, 20, or 28, wherein the RLC channel information comprises RLC mode information and/or packet delay budget (PDB) information for each RLC channel, and the PDB information is determined based on terminal implementation and/or split QoS information.

32. The method according to claim 14, 15, 19, or 29, wherein the QoS flow information comprises currently reported QoS information and/or split QoS information.

33. The method according to claim 2, 11, 17, 24, 25, 26, 29, or 30, wherein the identifier of the remote terminal is at least one of the following: a Layer 2 identifier, a local identifier.

34. The method according to any one of claims 3 to 7, 9, 10, 24, 25, 26, 28, or 30, wherein the identifier of the relay terminal is a Layer 2 identifier.

35. The method according to any one of claims 1 to 34, wherein the resource request information further comprises frequency information, wherein the frequency information indicates at least one of a frequency domain resource, a frequency, and a carrier that the terminal device is interested in for U2U relay link communication.

36. The method according to any one of claims 1 to 35, wherein the resource request information further comprises synchronization reference type information, wherein the synchronization reference type information indicates a synchronization reference type used on at least one of a frequency domain resource, a frequency, and a carrier for U2U relay link communication.

37. The method according to any one of claims 1 to 36, wherein the first information further comprises radio link failure (RLF) information.

38. The method according to claim 37, wherein when the terminal device is a first remote terminal, the RLF information indicates RLF of a direct link and/or a non-direct link of the terminal device.

39. The method according to claim 37, wherein when the terminal device is a relay terminal, the RLF information indicates RLF of a direct link.

40. The method according to claim 38 or 39, wherein the RLF information indicates a target address where RLF occurred and/or a cause of RLF.

41. The method according to claim 1, wherein the first information further comprises RLC channel information associated with one or more carriers.

42. A communication method, comprising:
receiving first information by a network device, wherein the first information comprises one or more resource request information of a terminal device, wherein the resource request information comprises first target information, or the resource request information comprises first target information and one or more second target information, and the terminal device is a terminal device in a sidelink.

43. The method according to claim 42, wherein the terminal device is a first remote terminal, the first target information comprises an identifier of a second remote terminal, and the second remote terminal is a peer remote terminal on a UE-to-UE(U2U) relay link where the first remote terminal is located.

44. The method according to claim 43, wherein the second target information comprises an identifier of a relay terminal on the U2U relay link where the first remote terminal is located.

45. The method according to claim 44, wherein the second target information comprises an identifier of a relay terminal directly connected to the first remote terminal.

46. The method according to claim 44 or 45, wherein target address information in a buffer status report (BSR) media access control (MAC) control element (CE) is determined based on the identifier of the relay terminal.

47. The method according to claim 46, wherein the terminal device reports the first information in an order of remote terminals associated with a same relay terminal.

48. The method according to any one of claims 44 to 47, wherein the second target information further comprises capability information of the relay terminal.

49. The method according to any one of claims 43 to 48, wherein the resource request information further comprises capability information of the second remote terminal.

50. The method according to claim 43, wherein the terminal device is the first remote terminal, and the first target information comprises an identifier of a relay terminal on the U2U relay link where the first remote terminal is located.

51. The method according to claim 50, wherein the first target information comprises an identifier of a relay terminal directly connected to the first remote terminal.

52. The method according to claim 50 or 51, wherein the one or more second target information comprise an identifier of the second remote terminal, and the second remote terminal is the peer remote terminal on the U2U relay link where the first remote terminal is located.

53. The method according to claim 52, wherein the second target information further comprises capability information of the second remote terminal.

54. The method according to any one of claims 50 to 53, wherein the resource request information further comprises capability information of the relay terminal.

55. The method according to any one of claims 43 to 53, wherein the resource request information further comprises quality of service (QoS) flow information, and the QoS flow information is QoS flow information between the first remote terminal and the second remote terminal.

56. The method according to claim 55, wherein the resource request information further comprises indication information indicating the second remote terminal associated with the QoS flow information.

57. The method according to any one of claims 43 to 46, wherein radio link control (RLC) channel information in the resource request information is RLC channel information between the first remote terminal and a relay terminal.

58. The method according to claim 42, wherein the terminal device is a relay terminal, and the resource request information comprises an identifier of a remote terminal for which the relay terminal provides relay services.

59. The method according to claim 58, wherein the resource request information comprises capability information of the remote terminal.

60. The method according to claim 58 or 59, wherein the resource request information further comprises QoS flow information, and the QoS flow information is QoS flow information between two remote terminals for which the relay terminal provides relay services.

61. The method according to any one of claims 58 to 60, wherein the resource request information comprises RLC channel information, and the RLC channel information is RLC channel information between the relay terminal and the remote terminal.

62. The method according to any one of claims 58 to 61, wherein the method further comprises:
reporting, by the relay terminal, service data adaptation protocol (SDAP) layer configuration from the remote terminal to a network device.

63. The method according to claim 42, wherein the resource request information indicates that a role of the terminal device is a first remote terminal or a relay terminal.

64. The method according to claim 63, wherein the resource request information further comprises role information of the terminal device.

65. The method according to claim 63, wherein when the first target information comprises an identifier of a second remote terminal and the second target information comprises an identifier of the relay terminal, the resource request information indicates that the terminal device is the first remote terminal.

66. The method according to claim 63, wherein when the first target information comprises an identifier of a remote terminal and the resource request information does not comprise the second target information or an identifier of the relay terminal, the resource request information indicates that the terminal device is the relay terminal.

67. The method according to claim 63, wherein when the first target information comprises an identifier of the relay terminal and the second target information in the resource request information is an identifier of a second remote terminal, the resource request information indicates that the terminal device is the first remote terminal.

68. The method according to claim 42, wherein the first information comprises first resource request information, second resource request information, and third resource request information, the first resource request information comprises single-hop target information, the second resource request information comprises end-to-end target information, and the third resource request information comprises an association relationship between the single-hop target information and the end-to-end target information.

69. The method according to claim 68, wherein the single-hop target information comprises at least one of the following: an identifier of a relay terminal; capability information of a relay terminal; frequency information; synchronization reference type information; RLC channel information.

70. The method according to claim 68 or 69, wherein the end-to-end target information comprises at least one of the following:
an identifier of a second remote terminal;
QoS flow information, which is QoS flow information between a first remote terminal and the second remote terminal;
indication information used to indicate the second remote terminal associated with the QoS flow information;
capability information of the second remote terminal.

71. The method according to any one of claims 68 to 70, wherein the association relationship comprises an association relationship between an identifier of a relay terminal and an identifier of a second remote terminal, and/or an association relationship between an identifier of the first resource request information and an identifier of the second resource request information.

72. The method according to claim 57, 61, or 69, wherein the RLC channel information comprises RLC mode information and/or packet delay budget (PDB) information of each RLC channel, and the PDB information is determined based on terminal implementation and/or split QoS information.

73. The method according to claim 55, 56, 60, or 70, wherein the QoS flow information comprises currently reported QoS information and/or split QoS information.

74. The method according to claim 43, 52, 58, 65, 66, 67, 70, or 71, wherein the identifier of the remote terminal is at least one of the following: a Layer 2 identifier, a local identifier.

75. The method according to any one of claims 44 to 48, 50, 51, 65, 66, 67, 69, or 71, wherein the identifier of the relay terminal is a Layer 2 identifier.

76. The method according to any one of claims 42 to 75, wherein the resource request information further comprises frequency information, wherein the frequency information indicates at least one of a frequency domain resource, a frequency, and a carrier that the terminal device is interested in for U2U relay link communication.

77. The method according to any one of claims 42 to 76, wherein the resource request information further comprises synchronization reference type information, wherein the synchronization reference type information indicates a synchronization reference type used on at least one of a frequency domain resource, a frequency, and a carrier for U2U relay link communication.

78. The method according to any one of claims 42 to 77, wherein the first information further comprises radio link failure (RLF) information.

79. The method according to claim 78, wherein when the terminal device is a first remote terminal, the RLF information indicates RLF of a direct link and/or a non-direct link of the terminal device.

80. The method according to claim 78, wherein when the terminal device is a relay terminal, the RLF information indicates RLF of a direct link.

81. The method according to claim 79 or 80, wherein the RLF information indicates a target address where RLF occurred and/or a cause of RLF.

82. The method according to claim 42, wherein the first information further comprises radio link control (RLC) channel information associated with one or more carriers.

83. A terminal device, comprising:
a sending unit, configured to send first information, wherein the first information comprises one or more resource request information, wherein the resource request information comprises first target information, or the resource request information comprises first target information and one or more second target information, and the terminal device is a terminal device in a sidelink.

84. A network device, comprising:
a receiving unit, configured to receive first information, wherein the first information comprises one or more resource request information, wherein the resource request information comprises first target information, or the resource request information comprises first target information and one or more second target information, and the terminal device is a terminal device in a sidelink.

85. A terminal device, comprising:
a transceiver;
a processor; and
a memory, wherein the memory is configured to store a computer program, the transceiver is configured to communicate with other devices, and the processor is configured to invoke and run the computer program stored in the memory, so as to cause the terminal device to execute the method according to any one of claims 1 to 41.

86. A network device, comprising:
a transceiver;
a processor; and
a memory, wherein the memory is configured to store a computer program, the transceiver is configured to communicate with other devices, and the processor is configured to invoke and run the computer program stored in the memory, so as to cause the network device to execute the method according to any one of claims 42 to 82.

87. A chip, comprising:
a processor, configured to invoke and run a computer program from a memory, so as to cause a device equipped with the chip to execute the method according to any one of claims 1 to 41 or 42 to 82.

88. A computer-readable storage medium, configured to store a computer program, wherein when the computer program is run by a device, the device is caused to execute the method according to any one of claims 1 to 41 or 42 to 82.

89. A computer program product, comprising computer program instructions, wherein the computer program instructions cause a computer to execute the method according to any one of claims 1 to 41 or 42 to 82.

90. A computer program, wherein the computer program causes a computer to execute the method according to any one of claims 1 to 41 or 42 to 82.

91. A communication system, comprising:
a terminal device, configured to execute the method according to any one of claims 1 to 41; and
a network device, configured to execute the method according to any one of claims 42 to 82.
